# EUROPEAN PATENT APPLICATION

(11) **EP 4 624 048 A1**
(43) Date of publication of application: **01.10.2025**
(21) Application number: 25164668.3
(22) Date of filing: 19.03.2025
(51) Int. Cl.: B01L 3/00

(54) **METHOD FOR CONTROLLING LIQUID INFLOW OF LIQUID PATH SYSTEM, LIQUID PATH SYSTEM, APPARATUS, DEVICE, AND STORAGE MEDIUM**

(30) Priority: 20.03.2024 CN 202410327304; 15.05.2024 CN 202410607811
(71) Applicant: GeneMind Biosciences Company Limited, Shenzhen City, 518023 Guangdong (CN)
(72) Inventor: MA, Minghui, Shenzhen City, 518023 (CN); HAN, Weichun, Shenzhen City, 518023 (CN); WU, Ping, Shenzhen City, 518023 (CN)
(74) Representative: Schiweck Weinzierl Koch Patentanwälte Partnerschaft mbB

(57) **Abstract**

The present application discloses a method for controlling the liquid inflow of a liquid path system, a liquid path system, a sequencing apparatus, a computer device, and a computer storage medium. The method includes: using a pump valve assembly to aspirate a plurality of samples under test from a sample cartridge and pump each sample under test from an outlet of one corresponding fluid channel into the fluid channel; or using the pump valve assembly to aspirate a single sample under test from the sample cartridge and pump the single sample under test from an inlet of each fluid channel into the fluid channel. In this way, different sample loading modes can be selected according to the number of the samples under test, improving the loading flexibility of the samples under test. In addition, by allowing each of the plurality of samples under test to enter from the outlet of one corresponding fluid channel into the fluid channel, the cross-contamination among the plurality of samples under test is avoided, and the sequencing quality and the sequencing efficiency are improved.

## Description

### TECHNICAL FIELD

The present disclosure relates to the field of gene sequencing, and in particular, to a method for controlling the liquid inflow of a liquid path system, a liquid path system, a sequencing apparatus, a computer device, and a computer storage medium.

### BACKGROUND

Gene sequencing technology refers to the technical means of acquiring the base sequence of DNA or RNA by assays. The current dominant sequencing technology is high-throughput sequencing. In a sequencing platform that achieves high-throughput sequencing based on sequencing by synthesis, the general gene sequencing process includes: fixing a nucleic acid sample under test on a flow cell, for example, by hybridization; forming a nucleic acid molecule cluster on the nucleic acid sample under test by using PCR amplification; adding sequencing reagents (e.g., bases with a fluorophore, a polymerase, a primer, and the like) to the flow cell; bonding the bases with the fluorophore to the base on the nucleic acid sample under test according to the base complementary pairing principle; exciting the fluorophore by an optical imaging system to generate fluorescence; collecting the fluorescence for forming an image; and performing base calling on the image, so as to achieve base sequence determination of the nucleic acid sample under test.

In the prior art, high-throughput sequencing can achieve nucleic acid sequence determination of a plurality of samples on the same flow cell, which can be achieved through multiplex sample analysis. The multiplex sample analysis involves adding to each nucleic acid fragment an index, barcode, or tag uniquely corresponding to the sample from which the nucleic acid fragment is derived in the library construction process, such that libraries of a plurality of samples can be mixed in one reaction system for sequencing to acquire sequencing data, and the sequencing data can be assigned to corresponding samples according to the index, barcode, or tag, thereby acquiring the sequencing data of each sample. However, there are often unavoidable errors in index, barcode, or tag assignment among multiplex libraries, such that sequencing data from sample A is erroneously assigned to another sample B, resulting in the occurrence of false positives or false negatives.

In addition, high-throughput sequencing can achieve nucleic acid sequence determination of a plurality of samples on the same flow cell, which can also be achieved by loading the plurality of samples into the flow cell via different fluid channels and then performing subsequent sequencing. For example, outside the sequencer, a plurality of different samples are manually loaded into different flow channels of the flow cell by using tools such as a pipette, and the flow cell is then placed into the sequencer to sequence the different samples. Such a method can avoid the problem of errors in sequencing data assignment caused by errors in index, barcode, or tag assignment. However, the method is cumbersome to operate, increases sequencing time and sequencing cost, and is prone to cross-contamination among samples (for example, due to manual operation errors or insufficient cleaning of the pipette). Furthermore, the loading flexibility of the samples is relatively low, the sequencing time is relatively long, and the sequencing efficiency is low.

### SUMMARY

The present disclosure solves at least one of the technical problems in the prior art by providing a method for controlling the liquid inflow of a liquid path system, a liquid path system, a sequencing apparatus, a computer device, and a computer storage medium.

Embodiments of the present disclosure provide a method for controlling the liquid inflow of a liquid path system. The liquid path system includes a flow cell and a pump valve assembly, where the flow cell includes a plurality of fluid channels, and each fluid channel is provided with an inlet and an outlet. The method includes:
using the pump valve assembly to aspirate a plurality of samples under test from a sample cartridge and pump each sample under test from the outlet of one corresponding fluid channel into the fluid channel; or using the pump valve assembly to aspirate a single sample under test from the sample cartridge and pump the single sample under test from the inlet of each fluid channel into the fluid channel.

In this way, the pump valve assembly can allow the single sample under test to enter the fluid channel from the inlet of each fluid channel, and can also allow each of the plurality of samples under test to enter from the outlet of one corresponding fluid channel into the fluid channel, such that different sample loading modes can be selected according to the number of the samples under test, and the loading flexibility of the samples under test is improved. In addition, by allowing each of the plurality of samples under test to enter from the outlet of one corresponding fluid channel into the fluid channel, the cross-contamination among the plurality of samples under test is avoided, and the sequencing quality and the sequencing efficiency are improved.

The embodiments of the present disclosure provide a liquid path system. The liquid path system includes a flow cell and a pump valve assembly, where the flow cell includes a plurality of fluid channels, and each fluid channel is provided with an inlet and an outlet; the pump valve assembly is configured to aspirate a plurality of samples under test from a sample cartridge and pump each sample under test from the outlet of one corresponding fluid channel into the fluid channel; or the pump valve assembly is configured to aspirate a single sample under test from the sample cartridge and pump the single sample under test from the inlet of each fluid channel into the fluid channel.

In this way, the pump valve assembly can allow the single sample under test to enter the fluid channel from the inlet of each fluid channel, and can also allow each of the plurality of samples under test to enter from the outlet of one corresponding fluid channel into the fluid channel, such that different sample loading modes can be selected according to the number of the samples under test, and the loading flexibility of the samples under test is improved. In addition, by allowing each of the plurality of samples under test to enter from the outlet of one corresponding fluid channel into the fluid channel, the cross-contamination among the plurality of samples under test is avoided, and the sequencing quality and the sequencing efficiency are improved.

The embodiments of the present disclosure provide a sequencing system. The sequencing system includes the liquid path system described above.

The embodiments of the present disclosure provide a computer device. The computer device includes a processor and a memory having a computer program stored thereon, where the computer program, when run by the processor, causes the processor to implement the method for controlling liquid flow in the liquid path system according to any one of the embodiments described above.

The embodiments of the present disclosure provide a computer storage medium, where the computer program, when run by a processor, causes the processor to implement the method for controlling liquid inflow of the liquid path system according to any one of the embodiments described above.

Additional aspects and advantages of the present disclosure will be partially provided in the following description, will partially become apparent from the following description, or will be learned through the practice of the present disclosure.

### BRIEF DESCRIPTION OF THE DRAWINGS

The aforementioned and/or additional aspects and advantages of the present disclosure will become apparent and easily understood from the description of the embodiments with reference to the following accompanying drawings, in which:
FIG. 1 is a schematic structural view of a liquid path system according to an embodiment of the present disclosure;
FIG. 2 is a schematic flowchart of a method according to an embodiment of the present disclosure;
FIG. 3 is a schematic flowchart of a method according to an embodiment of the present disclosure;
FIG. 4 is a schematic structural view of a first flow path selection valve according to an embodiment of the present disclosure;
FIG. 5 is a schematic structural view of a first flow path selection valve according to an embodiment of the present disclosure;
FIG. 6 is a schematic structural view of a liquid path system according to an embodiment of the present disclosure;
FIG. 7 is a schematic structural view of a fluid flow unit and a carrier apparatus according to an embodiment of the present disclosure;
FIG. 8 is an exploded view of a fluid flow unit and a carrier apparatus according to an embodiment of the present disclosure;
FIG. 9 is a schematic structural view of a fluid flow unit and a carrier apparatus according to an embodiment of the present disclosure;
FIG. 10 is a cross-sectional schematic view along the A-A direction of FIG. 9;
FIG. 11 is a schematic structural view of a first manifold member according to an embodiment of the present disclosure;
FIG. 12 is a schematic structural view of a second manifold member according to an embodiment of the present disclosure;
FIG. 13 is an enlarged schematic view of portion I in FIG. 10;
FIG. 14 is an enlarged schematic view of portion II in FIG. 10;
FIG. 15 is a schematic structural view of a fluid flow unit according to an embodiment of the present disclosure;
FIG. 16 is a schematic structural view of a fluid flow unit according to an embodiment of the present disclosure;
FIG. 17 is a schematic structural view of a carrier apparatus according to an embodiment of the present disclosure;
FIG. 18 is a schematic structural view of a fluid flow unit and a carrier apparatus according to an embodiment of the present disclosure;
FIG. 19 is a cross-sectional schematic view along the B-B direction of FIG. 18;
FIG. 20 is a schematic flowchart of a method according to an embodiment of the present disclosure; and
FIG. 21 is a schematic flowchart of a method according to an embodiment of the present disclosure.

Description of reference numerals:
100. liquid path system; 10. flow cell; 11. fluid channel; 12. inlet; 13. outlet; 20. pump valve assembly; 21. first flow path selection valve; 211. first port; 212. second port; 213. third port; 214. fourth port; 215. communication groove; 216. stator; 217. rotor; 218. plug; 22. pump group; 23. second flow path selection valve; 231. common port; 232. connection port; 24. manifold assembly; 30. sample cartridge; 40. buffer region; 50. reagent kit; 60. waste liquid reservoir; 70. solenoid valve; 81. first conduit; 82. second conduit; 83. third conduit; 831. liquid inlet; 832. liquid outlet;
1000. liquid path system; 100. manifold assembly; 110. first manifold member; 120. liquid inlet; 130. second manifold member; 140. liquid outlet; 150. second central axis; 200. fluid flow unit; 210. fluid channel; 220. fluid channel inlet; 230. fluid channel outlet; 240. first central axis; 250. positioning pin; 260. output port; 300. pump group; 310. syringe pump; 320. syringe; 330. four-port valve head; 340. waste liquid reservoir; 400. first sealing gasket; 410. first liquid passage hole; 420. first gasket body; 430. first flange; 440. second sealing gasket; 450. second liquid passage hole; 460. second gasket body; 470. second flange; 480. third central axis; 2000. carrier apparatus; 2100. carrier stage; 2010. carrier surface; 2020. positioning hole; 2030. groove channel; 2040. first groove channel; 2050. second groove channel; 2060. adsorption hole; 2070. sealing ring; 3000. vacuum apparatus; 3010. gas path connector; 3100. vacuum pump; 3200. first switching valve; 3210. first opening; 3220. second opening; 3300. second switching valve; 3310. third opening; 3320. fourth opening; 3330. fifth opening; 3400. first conduit; 3410. gas-water separation assembly; 3420. pressure detection member; 3430. vacuum pressure regulation valve; 3500. second conduit; 3510. muffler; 3600. third conduit; 3610. air filter.

### DETAILED DESCRIPTION

Embodiments of the present disclosure are described in detail below, and the examples of the embodiments are shown in the accompanying drawings, throughout which identical or similar reference numerals represent identical or similar elements or elements having identical or similar functionality. The embodiments described below with reference to the accompanying drawings are exemplary and are merely intended to illustrate the present disclosure, and should not be construed as limiting the present disclosure. The following disclosure provides many different embodiments or examples for implementing different structures of the present disclosure. To simplify the disclosure of the present disclosure, the components and settings of specific examples are described below. Certainly, the examples are merely exemplary and are not intended to limit the present disclosure. In addition, reference numerals and/or characters may be repeatedly used in different examples in the present disclosure for simplicity and clarity rather than to indicate the relationship between various embodiments and/or settings discussed. In addition, the present disclosure provides examples of various specific processes and materials, but those of ordinary skill in the art will recognize the application of other processes and/or the use of other materials.

As used herein, "sequencing" refers to nucleic acid sequence determination, synonymous with "nucleic acid sequencing" or "gene sequencing", which refers to the determination of the order of bases in the primary structure of a nucleic acid molecule. This can be achieved by sequencing by synthesis (SBS), sequencing by ligation (SBL), sequencing by hybridization (SBH), or the like. The sequencing by synthesis includes, in addition to the generally understood SBS (typical ILLUMINA/Solexa technology) in which incorporation of a nucleotide into a sample under test is catalyzed by using a polymerase (synthesis reaction) and a corresponding reaction signal is detected to identify the type of the incorporated nucleotide, sequencing similar to SBS, in which a nucleotide is controllably introduced or ligated to a sample under test by using a polymerase or a non-polymerase, and a corresponding signal is directly or indirectly detected to determine the type of the ligated nucleotide.

The sequencing may include DNA sequencing and/or RNA sequencing, which includes long fragment sequencing and/or short fragment sequencing (the long fragment and short fragment are defined relatively; for example, nucleic acid molecules longer than 1 Kb, 2 Kb, 5 Kb, or 10 Kb may be referred to as long fragments, and nucleic acid molecules shorter than 1 Kb or 800 bp may be referred to as short fragments); and may include double-end sequencing, single-end sequencing, paired-end sequencing, and/or the like, where the double-end sequencing or the paired-end sequencing may refer to the reading of any two segments or two portions of the same nucleic acid molecule that are not completely overlapping.

The sequencing may be performed through a sequencing platform. According to the embodiments of the present disclosure, the optional sequencing platforms include but are not limited to Illumina's Hiseq, Miseq, Nextseq, and Novaseq sequencing platforms, Thermo Fisher/Life Technologies' Ion Torrent platform, BGI's BGISEQ and MGISEQ/DNBSEQ platforms, as well as single-molecule sequencing platforms. The sequencing method may be selected from single-end sequencing, double-end sequencing, or sequencing methods supported by the selected automated sequencing platform.

The sequencing generally includes: library preparation, PCR amplification (optional), sequencing, and data analysis. The sequence assayed and read by sequencing is referred to as a sequencing sequence and is also referred to as reads.

In some examples, the sequencing sequence or the read is acquired by performing a plurality of cycles of sequencing using sequencing by synthesis. For example, a sample under test is allowed to contact with a polymerase and an altered nucleotide and be subjected to conditions suitable for a polymerization reaction, the altered nucleotide is allowed to be controllably incorporated into the sample under test or a single base extension is controllably achieved, a corresponding reaction signal is detected, the type of nucleotide incorporated into the sample under test in the reaction is determined based on the signal, and a plurality of controllable single base extensions and detections of corresponding signals are performed to assay the type of nucleotide or base incorporated into the sample under test in a plurality of reactions or a plurality of cycles of reactions based on the reaction signal information, thereby assaying and reading a portion of the sequence of the sample under test.

The sample under test, also referred to as a template or a template under test, may be a single molecule without amplification, or a molecular cluster or a long strand containing a plurality of the same polynucleotide molecule after amplification, such as a clonal cluster or a DNA nanoball (DNB) formed by bridge amplification or rolling circle amplification used in mainstream sequencing platforms. The sample under test may be in the form of a single strand, a double strand, and/or a complex hybridized with the probe or primer.

The corresponding reaction signals may be, for example, fluorescence signals, and may be converted into image data generated by collecting the fluorescence signals, and thus, the image data are processed and analyzed to assay the nucleotide incorporated into the sample under test in each reaction or each cycle of reaction, so as to determine a portion of the base sequence of the sample under test.

Specifically, in some examples, sequencing is achieved based on surface fluorescence imaging assay. The sample under test is ligated to the solid-phase surface, for example, nucleotides can be altered to have or bind fluorescent labels and cleavable inhibiting groups that can prevent other nucleotides from being polymerized and ligated to the next position of the sample under test (the altered nucleotides are also referred to as reversible terminators), and excitation is performed after each polymerization reaction or single base extension reaction to make the fluorescent labels emit light; the light-emitting signals are collected to acquire an image of the sample under test where the single base extension reaction occurs at the designated surface position. Next, the inhibiting groups, the fluorescent labels, and the like are removed to perform the next or the next cycle of polymerization reaction and signal acquisition (photographing); a plurality of or a plurality of cycles of polymerization-photographing-excision are repeated to acquire image set information on the nucleotide ligated to the sample under test in association with each single base extension reaction.

It can be understood that the sample under test at the designated position on the surface undergoes a polymerization reaction to emit fluorescence, which generally appears as a bright point or spot with an intensity higher than the background signal at the corresponding position of the image collected in the cycles of reaction. Therefore, according to the image set which includes the information on the bright spot corresponding to specific chemical features (the sample under test in which the polymerization reaction occurs), whether the sample under test at the designated position undergoes a polymerization reaction can be determined. The type of nucleotide that has been polymerized and ligated to the sample under test in the polymerization reaction can be assayed through the conjunction of the corresponding relationship between the preset distinguishable fluorescent light-emitting signal and the type of the nucleotide, such that at least a portion of the sequence of the sample under test can be determined to acquire the read.

It should be noted that the nucleotide includes ribonucleic acid or deoxyribonucleic acid, and includes natural nucleotides, derivatives thereof, or altered products thereof (also referred to as altered nucleotides, modified nucleotides, or the like). As used herein, the nucleotide is sometimes referred to by the base it contains, which can be understood by those skilled in the art based on conventional knowledge and/or context.

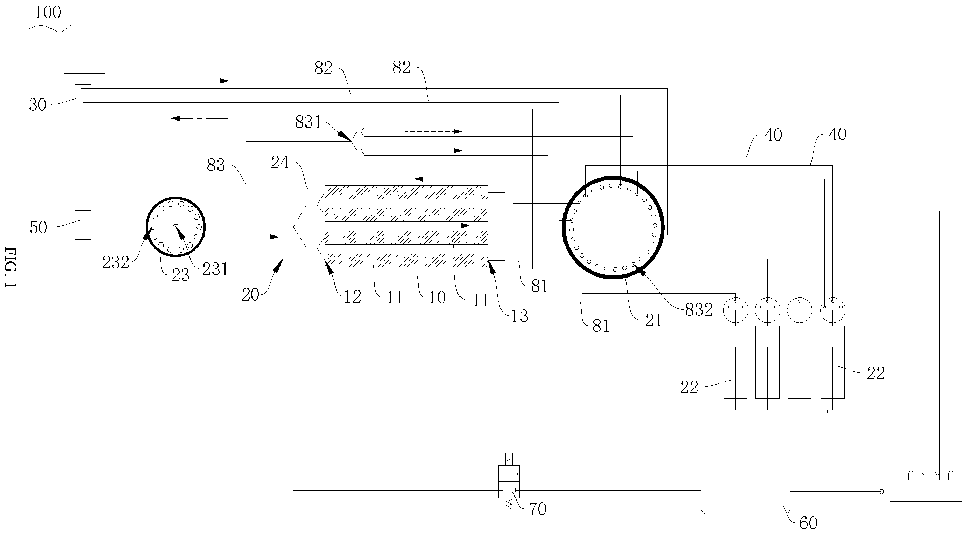

Referring to FIG. 1, the embodiments of the present disclosure provide a method for controlling the liquid inflow of a liquid path system 100. The liquid path system 100 includes a detachable flow cell 10 and a pump valve assembly 20, where the flow cell 10 includes a plurality of fluid channels 11, and each fluid channel 11 is provided with an inlet 12 and an outlet 13. The method includes:
using the pump valve assembly 20 to aspirate a plurality of samples under test from a sample cartridge 30 and pump each sample under test from the outlet 13 of one corresponding fluid channel 11 into the fluid channel 11; or
using the pump valve assembly 20 to aspirate a single sample under test from the sample cartridge 30 and pump the single sample under test into the fluid channel 11 from the inlet 12 of each fluid channel 11.

The embodiments of the present disclosure provide a liquid path system 100. The liquid path system 100 includes a detachable flow cell 10 and a pump valve assembly 20, where the flow cell 10 includes a plurality of fluid channels 11, and each fluid channel 11 is provided with an inlet 12 and an outlet 13; the pump valve assembly 20 is configured to aspirate a plurality of samples under test from a sample cartridge 30 and pump each sample under test from the outlet 13 of one corresponding fluid channel 11 into the fluid channel 11; or the pump valve assembly 20 is configured to aspirate a single sample under test from the sample cartridge 30 and pump the single sample under test from the inlet 12 of each fluid channel 11 into the fluid channel 11.

The embodiments of the present disclosure provide a computer device. The computer device includes a processor and a memory having a computer program stored thereon, where the computer program, when run by the processor, causes the processor to implement the method for controlling liquid flow in the liquid path system 100 according to any one of the embodiments described above. For example, the processor is configured to use the pump valve assembly 20 to aspirate a plurality of samples under test from the sample cartridge 30 and pump each sample under test from the outlet 13 of one corresponding fluid channel 11 into the fluid channel 11; or configured to use the pump valve assembly 20 to aspirate a single sample under test from the sample cartridge 30 and pump the single sample under test into the fluid channel 11 from the inlet 12 of each fluid channel 11.

In this way, the pump valve assembly 20 can allow the single sample under test to enter the fluid channel 11 from the inlet 12 of each fluid channel 11, and can also allow each of the plurality of samples under test to enter from the outlet 13 of one corresponding fluid channel 11 into the fluid channel 11, such that different sample loading modes can be selected according to the number of the samples under test, and the loading flexibility of the samples under test is improved. In addition, by allowing each of the plurality of samples under test to enter from the outlet 13 of one corresponding fluid channel 11 into the fluid channel 11, the cross-contamination among the plurality of samples under test is avoided, and the sequencing quality and the sequencing efficiency are improved.

Specifically, the flow cell 10 is configured to provide a place for biochemical reactions during sequencing. The flow cell 10 may also be referred to as a chip, and the flow cell 10 may be detachably connected to the pump valve assembly 20. The fluid channel 11 is provided with a space for accommodating liquid and can accommodate a sample under test and a reagent, thereby allowing the sample under test to undergo a biochemical reaction with the reagent. The sample under test may be fixed on the inner surface of the fluid channel 11. The plurality of fluid channels 11 in the flow cell 10 are arranged in parallel. There may be three, four, five, six, etc., fluid channels 11, and the dimension of each fluid channel 11 may be the same or different. In some embodiments, the fluid channel 11 has a non-circular cross-section or an approximately rectangular cross-section. The width of the fluid channel 11 is at least 2 mm, approximately 4 mm, or approximately 7 mm, and the height of the fluid channel 11 may be at least 0.8 mm or approximately 1.2 mm.

The sample under test includes at least one nucleic acid molecule, and the reagent includes a polymerase and at least one nucleotide molecule. The polymerase is used to bind the nucleotide molecule to the nucleic acid molecule. The base types may be the same or different among the plurality of nucleotide molecules. The nucleotide molecule is provided with a blocking group for blocking the binding of more than one nucleotide to the nucleic acid molecule, and the blocking group is provided with an optically detectable label that allows the reaction between the nucleotide molecule and the nucleic acid molecule to be detected, thereby allowing sequence determination of the nucleic acid molecule.

The pump valve assembly 20 includes at least one pump group 22 and at least one valve, and the pump valve assembly 20 is configured to control the flow direction of the sample under test. The sample cartridge 30 can selectively communicate with the inlet 12 of the fluid channel 11 or the outlet 13 of the fluid channel 11 via the pump valve assembly 20. When the sample cartridge 30 communicates with the inlet 12 of the fluid channel 11, the pump valve assembly 20 pumps the single sample under test in the sample cartridge 30 into the fluid channel 11 from the inlet 12 of each fluid channel 11; when the sample cartridge 30 communicates with the outlet 13 of the fluid channel 11, the pump valve assembly 20 pumps each of the plurality of samples under test in the sample cartridge 30 from the outlet 13 of one corresponding fluid channel 11 into the fluid channel 11.

The sample cartridge 30 is configured to store samples under test. Furthermore, the sample cartridge 30 may receive reagents or recovered samples.

Referring to FIG. 1, in some embodiments, the liquid path system 100 includes a plurality of buffer regions 40, and the plurality of buffer regions 40 are arranged in one-to-one correspondence with the plurality of fluid channels 11.

Pumping each sample under test from the outlet 13 of one corresponding fluid channel 11 into the fluid channel 11 includes:
pumping each sample under test into one corresponding buffer region 40; and pumping the sample under test in each buffer region 40 from the outlet 13 of the corresponding fluid channel 11 into the fluid channel 11.

In some embodiments, the pump valve assembly 20 is configured to pump each sample under test into one corresponding buffer region 40 and pump the sample under test in each buffer region 40 from the outlet 13 of the corresponding fluid channel 11 into the fluid channel 11.

In some embodiments, the processor is configured to use the pump valve assembly 20 to pump each sample under test into one corresponding buffer region 40 and pump the sample under test in each buffer region 40 from the outlet 13 of the corresponding fluid channel 11 into the fluid channel 11.

In this way, each buffer region 40 can store one of the plurality of samples under test, such that the pump valve assembly 20 can pump each sample under test from the outlet 13 of the corresponding fluid channel 11 into the fluid channel 11 through the corresponding buffer region 40 to achieve the reverse flow of the sample under test in the fluid channel 11. This improves the loading flexibility of the samples under test, and at the same time avoids the cross-contamination among the plurality of samples under test, thus improving the sequencing quality and the sequencing efficiency.

Specifically, the buffer region 40 may be a conduit or a liquid storage bottle. The buffer region 40 selectively communicates with the sample cartridge 30 and the outlet 13 of the fluid channel 11. When the buffer region 40 communicates with the sample cartridge 30, the pump valve assembly 20 pumps each sample under test in the sample cartridge 30 into the corresponding buffer region 40; when the buffer region 40 communicates with the outlet 13 of the fluid channel 11, the pump valve assembly 20 pumps the sample under test in each buffer region 40 into the fluid channel 11 from the outlet 13 of the corresponding fluid channel 11.

In some embodiments, the method further includes:
aspirating, by using the pump valve assembly 20, a reagent from a reagent kit 50, pumping the reagent into each buffer region 40, and pumping the reagent in each buffer region 40 into the fluid channel 11 from the outlet 13 of the corresponding fluid channel 11.

In some embodiments, the pump valve assembly 20 is configured to aspirate the reagent from the reagent kit 50, pump the reagent into each buffer region 40, and pump the reagent in each buffer region 40 into the fluid channel 11 from the outlet 13 of the corresponding fluid channel 11.

In some embodiments, the processor is configured to use the pump valve assembly 20 to aspirate the reagent from the reagent kit 50, pump the reagent into each buffer region 40, and pump the reagent in each buffer region 40 into the fluid channel 11 from the outlet 13 of the corresponding fluid channel 11.

In this way, the buffer region 40 can store the reagent, such that the pump valve assembly 20 can pump the reagent into the fluid channel 11 from the outlet 13 of the corresponding fluid channel 11 via each buffer region 40 to achieve the reverse flow of the reagent in the fluid channel 11. This improves the loading flexibility of the reagent, and at the same time reduces the sequencing time, thus improving the sequencing efficiency.

Specifically, the reagent kit 50 is configured to store the reagent. The reagent includes but is not limited to a DNA primer, a DNA-fragmentation enzyme, a T4 DNA polymerase, a Klenow enzyme, a base, a ligase, a DNA adapter, a T4 polynucleotide kinase, a cleaning solution, or purified water. For example, a DNA primer in the reagent kit 50 is pumped into the fluid channel 11, such that the DNA primer can be linked to the flow cell 10 via a covalent bond.

The buffer region 40 selectively communicates with the reagent kit 50 and the outlet 13 of the fluid channel 11. When the buffer region 40 communicates with the reagent kit 50, the pump valve assembly 20 pumps the reagent in the reagent kit 50 into each buffer region 40; when the buffer region 40 communicates with the outlet 13 of the fluid channel 11, the pump valve assembly 20 pumps the reagent in each buffer region 40 into the fluid channel 11 from the outlet 13 of the corresponding fluid channel 11.

In some embodiments, the pump valve assembly 20 pumps the sample under test and/or the reagent into the buffer region 40 in a negative pressure-driven manner.

In this way, the pump valve assembly 20 can generate negative pressure to drive the sample under test and/or the reagent to move toward the buffer region 40, enabling the transportation of the sample under test and/or the reagent.

Specifically, the pump valve assembly 20 may pump the sample under test from the sample cartridge 30 into the buffer region 40 in a negative pressure-driven manner. The pump valve assembly 20 may also pump the reagent from the reagent kit 50 into the buffer region 40 in a negative pressure-driven manner. The pump valve assembly 20 may still pump the sample under test and the reagent into the buffer region 40 in a negative pressure-driven manner.

In some embodiments, the pump valve assembly 20 pumps the sample under test and/or the reagent in the buffer region 40 into the fluid channel 11 from the outlet 13 of the fluid channel 11 in a positive pressure-driven manner.

In this way, the pump valve assembly 20 can generate positive pressure to drive the sample under test and/or the reagent to move from the buffer region 40 toward the fluid channel 11, enabling the transportation of the sample under test and/or the reagent.

Specifically, the pump valve assembly 20 may pump the sample under test in the buffer region 40 into the fluid channel 11 from the outlet 13 of the fluid channel 11 in a positive pressure-driven manner. The pump group may also pump the reagent in the buffer region 40 into the fluid channel 11 from the outlet 13 of the fluid channel 11 in a positive pressure-driven manner. The pump group may still pump the sample under test and the reagent in the buffer region 40 into the fluid channel 11 from the outlet 13 of the fluid channel 11 in a positive pressure-driven manner.

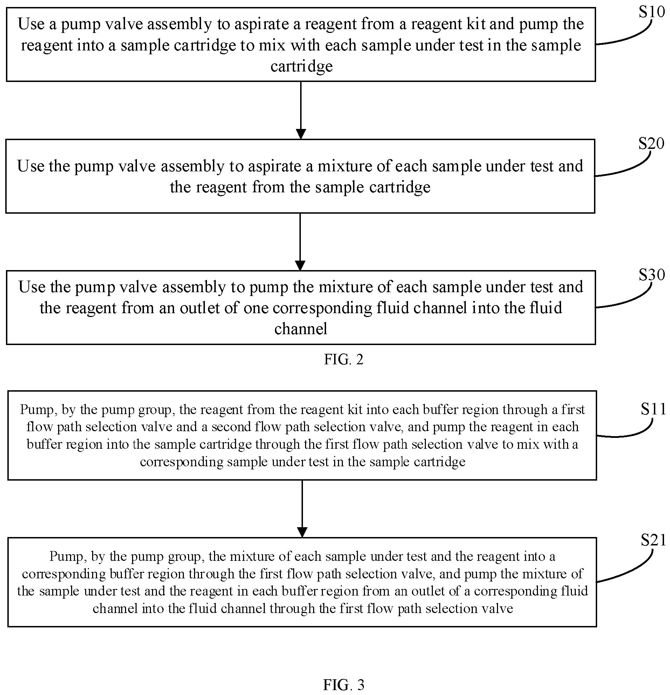

Referring to FIG. 2, in some embodiments, before using the pump valve assembly 20 to aspirate the plurality of samples under test from the sample cartridge 30, the method includes:
S10, using the pump valve assembly 20 to aspirate the reagent from the reagent kit 50 and pump the reagent into the sample cartridge 30 to mix with each sample under test in the sample cartridge 30.

In some embodiments, the pump valve assembly 20 is configured to aspirate the reagent from the reagent kit 50 and pump the reagent into the sample cartridge 30 to mix with each sample under test in the sample cartridge 30.

In some embodiments, the processor is configured to use the pump valve assembly 20 to aspirate the reagent from the reagent kit 50 and pump the reagent into the sample cartridge 30 to mix with each sample under test in the sample cartridge 30.

In this way, each sample under test and the reagent are allowed to be mixed in the sample cartridge 30 first before entering the fluid channel 11, allowing the sample under test to be processed. This saves the time required for processing the sample under test before it is loaded onto the machine, which is beneficial for industrialization.

Specifically, the reagent and the sample under test may be mixed uniformly by using a rotational mixing method, a finger-flick mixing method, a reverse mixing method, a pipette mixing method, a stirring mixing method, or the like. For example, during library preparation, a sample under test is mixed with a DNA-fragmentation enzyme, a T4 DNA polymerase, a Klenow enzyme, an A base, a ligase, and a DNA adapter. The sample under test can be fragmented by the DNA-fragmentation enzyme, both ends of the DNA fragment can be filled in by the T4 DNA polymerase, one A base is added to the 3' end of the DNA fragment by the Klenow enzyme, and the DNA adapter is ligated to both ends of the DNA fragment by the ligase.

Referring to FIG. 2, in some embodiments, using the pump valve assembly 20 to aspirate the plurality of samples under test from the sample cartridge 30 includes:
S20, using the pump valve assembly 20 to aspirate the mixture of each sample under test and the reagent from the sample cartridge 30.

In some embodiments, the pump valve assembly 20 is configured to aspirate the mixture of each sample under test and the reagent from the sample cartridge 30.

In some embodiments, the processor is configured to use the pump valve assembly 20 to aspirate the mixture of each sample under test and the reagent from the sample cartridge 30.

In this way, the sample cartridge 30 can store the mixture of each sample under test and the reagent, which facilitates the pump valve assembly 20 to aspirate the sample under test and/or the mixture of the sample under test and the reagent from the sample cartridge 30. This improves the utilization rate of the sample cartridge 30, reduces containers for storing the mixture of the sample under test and the reagent, and simplifies the structure of the liquid path system 100, thereby saving space.

Specifically, the sample cartridge 30 may store each sample under test, and may also mix each sample under test with the reagent and store the mixture after mixing. The pump valve assembly 20 may aspirate each sample under test from the sample cartridge 30 or aspirate the mixture of each sample under test and the reagent.

Referring to FIG. 2, in some embodiments, pumping each sample under test from the outlet 13 of one corresponding fluid channel 11 into the fluid channel 11 includes:
S30, using the pump valve assembly 20 to pump the mixture of each sample under test and the reagent from the outlet 13 of one corresponding fluid channel 11 into the fluid channel 11.

In some embodiments, the pump valve assembly 20 is configured to pump the mixture of each sample under test and the reagent from the outlet 13 of one corresponding fluid channel 11 into the fluid channel 11.

In some embodiments, the processor is configured to use the pump valve assembly 20 to pump the mixture of each sample under test and the reagent from the outlet 13 of one corresponding fluid channel 11 into the fluid channel 11.

In this way, the pump valve assembly 20 can allow the mixture of each sample under test and the reagent to enter from the outlet 13 of one corresponding fluid channel 11 into the fluid channel 11. The reverse flow of the mixture of the sample under test and the reagent in the fluid channel 11 improves the loading flexibility of the sample under test, and at the same time reduces the sequencing time, thus improving the sequencing efficiency.

Specifically, the pump valve assembly 20 may pump the mixture of the sample under test and the reagent into the fluid channel 11 from the outlet 13 of the fluid channel 11 and discharge the mixture of the sample under test and the reagent flowing out of the fluid channel 11 from the inlet 12 of the fluid channel 11. Referring to FIG. 1, in some embodiments, the liquid path system 100 includes a plurality of buffer regions 40, and the plurality of buffer regions 40 are arranged in one-to-one correspondence with the plurality of fluid channels 11.

Using the pump valve assembly 20 to aspirate the reagent from the reagent kit 50 and pump the reagent into the sample cartridge 30 to mix with each sample under test in the sample cartridge 30 includes:
using the pump valve assembly 20 to pump the reagent into each buffer region 40 and pump the reagent in each buffer region 40 into the sample cartridge 30 to mix with the corresponding sample under test in the sample cartridge 30.

In some embodiments, the pump valve assembly 20 is configured to pump the reagent into each buffer region 40 and pump the reagent in each buffer region 40 into the sample cartridge 30 to mix with the corresponding sample under test in the sample cartridge 30.

In some embodiments, the processor is configured to use the pump valve assembly 20 to pump the reagent into each buffer region 40 and pump the reagent in each buffer region 40 into the sample cartridge 30 to mix with the corresponding sample under test in the sample cartridge 30.

In this way, the buffer region 40 can store the reagent, such that the pump valve assembly 20 can pump the reagent from the reagent kit 50 into the sample cartridge 30 through each buffer region 40.

Specifically, the buffer region 40 selectively communicates with the reagent kit 50 and the sample cartridge 30. When the buffer region 40 communicates with the reagent kit 50, the pump valve assembly 20 pumps the reagent in the reagent kit 50 into each buffer region 40; when the buffer region 40 communicates with the sample cartridge 30, the pump valve assembly 20 pumps the reagent in each buffer region 40 into the sample cartridge 30 to mix with the corresponding sample under test in the sample cartridge 30.

In some embodiments, pumping the mixture of each sample under test and the reagent from the outlet 13 of the one corresponding fluid channel 11 into the fluid channel 11 includes:
pumping the mixture of each sample under test and the reagent back into the corresponding buffer region 40 and pumping the mixture of the sample under test and the reagent in each buffer region 40 from the outlet 13 of the corresponding fluid channel 11 into the fluid channel 11.

In some embodiments, the pump valve assembly 20 is configured to pump the mixture of each sample under test and the reagent back into the corresponding buffer region 40 and pump the mixture of the sample under test and the reagent in each buffer region 40 from the outlet 13 of the corresponding fluid channel 11 into the fluid channel 11.

In some embodiments, the processor is configured to pump the mixture of each sample under test and the reagent back into the corresponding buffer region 40 and pump the mixture of the sample under test and the reagent in each buffer region 40 from the outlet 13 of the corresponding fluid channel 11 into the fluid channel 11.

In this way, the buffer region 40 can store the mixture of each sample under test and the reagent, such that the pump valve assembly 20 can pump the mixture of each sample under test and the reagent from the outlet 13 of the corresponding fluid channel 11 into the fluid channel 11 through the corresponding buffer region 40 to achieve the reverse flow of the mixture of the sample under test and the reagent in the fluid channel 11. This improves the loading flexibility of the samples under test, and at the same time avoids the cross-contamination among the plurality of samples under test, thus improving the sequencing quality and the sequencing efficiency.

Specifically, the buffer region 40 selectively communicates with the sample cartridge 30 and the outlet 13 of the fluid channel 11. When the buffer region 40 communicates with the sample cartridge 30, the pump valve assembly 20 pumps each mixture in the sample cartridge 30 into each buffer region 40; when the buffer region 40 communicates with the outlet 13 of the fluid channel 11, the pump valve assembly 20 pumps the mixture in each buffer region 40 from the outlet 13 of the corresponding fluid channel 11 into the fluid channel 11.

In some embodiments, the pump valve assembly 20 pumps the mixture of the sample under test and the reagent into the buffer region 40 in a negative pressure-driven manner.

In this way, the pump valve assembly 20 can generate negative pressure to drive the mixture of the sample under test and the reagent to move toward the buffer region 40, enabling the transportation of the mixture of the sample under test and the reagent.

In some embodiments, the pump valve assembly 20 pumps the mixture of the sample under test and the reagent in the buffer region 40 from the outlet 13 of the fluid channel 11 into the fluid channel 11 in a positive pressure-driven manner.

In this way, the pump valve assembly 20 can generate positive pressure to drive the mixture of the sample under test and the reagent to move from the buffer region 40 toward the fluid channel 11, enabling the transportation of the mixture of the sample under test and the reagent.

Specifically, the pump valve assembly 20 may pump the reagent from the reagent kit 50 into the buffer region 40 in a negative pressure-driven manner, then pump the reagent in the buffer region 40 into the sample cartridge 30 in a positive pressure-driven manner to mix with the sample under test in the sample cartridge 30, subsequently pump the mixture of the sample under test and the reagent from the sample cartridge 30 into the buffer region 40 in a negative pressure-driven manner, and finally pump the mixture of the sample under test and the reagent in the buffer region 40 from the outlet 13 of the fluid channel 11 into the fluid channel 11 in a positive pressure-driven manner.

In some embodiments, the method further includes:
using the pump valve assembly 20 to aspirate a reagent from a reagent kit 50 and pump the reagent from the inlet 12 of each fluid channel 11 into the fluid channel 11.

In some embodiments, the pump valve assembly 20 is configured to aspirate the reagent from the reagent kit 50 and pump the reagent from the inlet 12 of each fluid channel 11 into the fluid channel 11.

In some embodiments, the processor is configured to use the pump valve assembly 20 to aspirate the reagent from the reagent kit 50 and pump the reagent from the inlet 12 of each fluid channel 11 into the fluid channel 11.

In this way, the pump valve assembly 20 can allow the reagent to enter from the outlet 13 of each fluid channel 11 into the fluid channel 11, and can also allow the reagent to enter from the inlet 12 of the fluid channel 11 into the fluid channel 11. The bidirectional flow of the reagent in the fluid channel 11 improves the loading flexibility of the reagent, and at the same time reduces the sequencing time, thus improving the sequencing efficiency.

Specifically, the reagent kit 50 may selectively communicate with the inlet 12 of the fluid channel 11 or the outlet 13 of the fluid channel 11 via the pump valve assembly 20. When the reagent kit 50 communicates with the inlet 12 of the fluid channel 11, the pump valve assembly 20 pumps the reagent in the reagent kit 50 from the inlet 12 of each fluid channel 11 into the fluid channel 11; when the reagent kit 50 communicates with the outlet 13 of the fluid channel 11, the pump valve assembly 20 pumps the reagent in the reagent kit 50 from the outlet 13 of each fluid channel 11 into the fluid channel 11.

In some embodiments, the pump valve assembly 20 pumps the single sample under test and/or the reagent from the inlet 12 of each fluid channel 11 into the fluid channel 11 in a negative pressure-driven manner.

In this way, the pump valve assembly 20 can generate negative pressure to drive the single sample under test and/or the reagent to move toward each fluid channel 11, enabling the transportation of the single sample under test and/or the reagent.

Specifically, the pump valve assembly 20 may pump the single sample under test in the sample cartridge 30 from the inlet 12 of the fluid channel 11 into each fluid channel 11 in a negative pressure-driven manner. The pump valve assembly may also pump the reagent in the reagent kit 50 from the inlet 12 of the fluid channel **11** into each fluid channel **11** in a negative pressure-driven manner. The pump valve assembly may still pump the single sample under test and the reagent from the inlet 12 of the fluid channel **11** into each fluid channel **11** in a negative pressure-driven manner.

Referring to FIG. 1, in some embodiments, the pump valve assembly 20 includes a first flow path selection valve 21 and a pump group 22.

The first flow path selection valve 21 and the pump group 22 are both located downstream of the flow cell 10.

The first flow path selection valve 21 is configured to communicate the pump group 22 with the fluid channel 11, and/or communicate the pump group 22 with the sample cartridge 30.

A plurality of samples under test are aspirated from the sample cartridge 30 via the first flow path selection valve 21 and the pump group 22, and each sample under test is allowed to enter from the outlet 13 of one corresponding fluid channel 11 into the fluid channel 11.

In some embodiments, the first flow path selection valve 21 and the pump group 22 are configured to aspirate a plurality of samples under test from the sample cartridge 30 and allow each sample under test to enter from the outlet 13 of one corresponding fluid channel 11 into the fluid channel 11.

In some embodiments, the processor is configured to aspirate a plurality of samples under test from the sample cartridge 30 via the first flow path selection valve 21 and the pump group 22 and allow each sample under test to enter from the outlet 13 of one corresponding fluid channel 11 into the fluid channel 11.

In this way, the sample cartridge 30 and each fluid channel 11 can be communicated via the first flow path selection valve 21, enabling the control of flow paths for the plurality of samples under test.

Specifically, the first flow path selection valve 21 and the pump group 22 communicate with the outlet 13 of each fluid channel 11. As shown by the dotted line in FIG. 1, the first flow path selection valve 21 may communicate the pump group 22 with the sample cartridge 30, such that the pump group 22 aspirates a plurality of samples under test from the sample cartridge 30. The first flow path selection valve 21 may also communicate the pump group 22 with the outlet 13 of each fluid channel 11, such that the pump group 22 drives each sample under test to enter from the outlet 13 of one corresponding fluid channel 11 into the fluid channel 11. The pump group 22 may be a peristaltic pump, a plunger pump, a syringe pump, a gear pump, a diaphragm pump, and the like. The pump group 22 can provide both negative pressure and positive pressure. The pump group 22 includes a plurality of single pumps. The plurality of single pumps are in one-to-one correspondence with a plurality of fluid channels 11.

Referring to FIG. 1, in some embodiments, a plurality of buffer regions 40 are arranged between the first flow path selection valve 21 and the pump group 22, and the plurality of buffer regions 40 are arranged in one-to-one correspondence with a plurality of fluid channels 11.

Aspirating the plurality of samples under test from the sample cartridge 30 via the first flow path selection valve 21 and the pump group 22 and allowing each sample under test to enter from the outlet 13 of the one corresponding fluid channel 11 into the fluid channel 11 includes:
pumping, by the pump group 22, each sample under test from the sample cartridge 30 into one corresponding buffer region 40 through the first flow path selection valve 21, and pumping the sample under test in each buffer region 40 from the outlet 13 of the corresponding fluid channel 11 into the fluid channel 11 through the first flow path selection valve 21.

In some embodiments, the pump group 22 is configured to pump each sample under test from the sample cartridge 30 into one corresponding buffer region 40 through the first flow path selection valve 21 and pump the sample under test in each buffer region 40 from the outlet 13 of the corresponding fluid channel 11 into the fluid channel 11 through the first flow path selection valve 21.

In some embodiments, the processor is configured to pump, via the pump group 22, each sample under test from the sample cartridge 30 into one corresponding buffer region 40 through the first flow path selection valve 21 and pump the sample under test in each buffer region 40 from the outlet 13 of the corresponding fluid channel 11 into the fluid channel 11 through the first flow path selection valve 21.

In this way, the first flow path selection valve 21 can select the sample cartridge 30 and the fluid channel 11 to communicate with the buffer region 40, enabling the control of switching flow paths for the plurality of samples under test.

Specifically, the first flow path selection valve 21 may communicate each buffer region 40 with the sample cartridge 30, such that the pump group 22 pumps each of the plurality of samples under test from the sample cartridge 30 into one corresponding buffer region 40 through the first flow path selection valve 21. The first flow path selection valve 21 may also communicate each buffer region 40 with the outlet 13 of the corresponding fluid channel 11, such that the pump group 22 pumps the sample under test in each buffer region 40 from the outlet 13 of the corresponding fluid channel 11 into the fluid channel 11 through the first flow path selection valve 21.

Referring to FIG. 1, in some embodiments, the pump valve assembly 20 further includes a second flow path selection valve 23.

The second flow path selection valve 23 is located upstream of the flow cell 10, and the second flow path selection valve 23 is configured to communicate a reagent kit 50 with the first flow path selection valve 21. A reagent is aspirated from the reagent kit 50 via the first flow path selection valve 21, the second flow path selection valve 23, and the pump group 22, and the reagent is allowed to enter from the outlet 13 of the fluid channel 11 into the fluid channel 11.

In some embodiments, the first flow path selection valve 21, the second flow path selection valve 23, and the pump group 22 are configured to aspirate a reagent from the reagent kit 50 and allow the reagent to enter from the outlet 13 of the fluid channel 11 into the fluid channel 11.

In some embodiments, the processor is configured to aspirate a reagent from the reagent kit 50 via the first flow path selection valve 21, the second flow path selection valve 23, and the pump group 22 and allow the reagent to enter from the outlet 13 of the fluid channel 11 into the fluid channel 11.

In this way, the reagent kit 50 and the fluid channel 11 can be communicated via the first flow path selection valve 21 and the second flow path selection valve 23, enabling the control of the flow path for the reagent.

Specifically, the second flow path selection valve 23 communicates with the reagent kit 50. As shown by the dotted line in FIG. 1, the first flow path selection valve 21 may communicate the pump group 22 with the second flow path selection valve 23, such that the pump group 22 aspirates a reagent from the reagent kit 50. The first flow path selection valve 21 may also communicate the pump group 22 with the outlet 13 of the fluid channel 11, such that the pump group 22 drives the reagent to enter the fluid channel **11** from the outlet 13 of the fluid channel 11. The second flow path selection valve 23 may be a reversing apparatus such as a rotary valve, a pneumatic reversing valve, an electro-hydraulic reversing valve, a manual reversing valve, a piezoelectric valve, a pinch valve, or a rotary cut valve.

**In** some embodiments, aspirating the reagent from the reagent kit 50 via the first flow path selection valve 21, the second flow path selection valve 23, and the pump group 22 and allowing the reagent to enter from the outlet 13 of the fluid channel 11 into the fluid channel 11 includes:
pumping, by the pump group 22, the reagent from the reagent kit 50 into each buffer region 40 through the second flow path selection valve 23 and the first flow path selection valve 21, and pumping the reagent in each buffer region 40 into the fluid channel 11 from the outlet 13 of the corresponding fluid channel 11 through the first flow path selection valve 21.

In some embodiments, the pump group 22 is configured to pump the reagent from the reagent kit 50 into each buffer region 40 through the second flow path selection valve 23 and the first flow path selection valve 21, and pump the reagent in each buffer region 40 into the fluid channel 11 from the outlet 13 of the corresponding fluid channel 11 through the first flow path selection valve 21.

In some embodiments, the processor is configured to pump, via the pump group 22, the reagent from the reagent kit 50 into each buffer region 40 through the second flow path selection valve 23 and the first flow path selection valve 21 and pump the reagent in each buffer region 40 into the fluid channel 11 from the outlet 13 of the corresponding fluid channel 11 through the first flow path selection valve 21.

In this way, the first flow path selection valve 21 can select the second flow path selection valve 23 and the fluid channel 11 to communicate with the buffer region 40, enabling the control of switching flow paths for the reagent in the reagent kit 50 connected to the second flow path selection valve 23.

Specifically, the second flow path selection valve 23 communicates the reagent kit 50 with the first flow path selection valve 21. The first flow path selection valve 21 may communicate each buffer region 40 with the second flow path selection valve 23, such that the pump group 22 pumps a reagent from the reagent kit 50 into each buffer region 40 through the second flow path selection valve 23 and the first flow path selection valve 21. The first flow path selection valve 21 may also communicate each buffer region 40 with the outlet 13 of the corresponding fluid channel 11, such that the pump group 22 pumps the reagent in each buffer region 40 into the fluid channel 11 from the outlet 13 of the corresponding fluid channel 11 through the first flow path selection valve 21.

In some embodiments, the pump group 22 pumps a sample under test and/or a reagent into the buffer region 40 through the first flow path selection valve 21 in a negative pressure-driven manner.

In this way, the pump group 22 can generate negative pressure to drive the sample under test and/or the reagent to move toward the buffer region 40, enabling the transportation of the sample under test and/or the reagent.

Specifically, the pump group 22 may pump the sample under test from the sample cartridge 30 into the buffer region 40 through the first flow path selection valve 21 in a negative pressure-driven manner. The pump group 22 may also pump the reagent from the reagent kit 50 into the buffer region 40 through the second flow path selection valve 23 and the first flow path selection valve 21 in a negative pressure-driven manner. The pump group 22 may still pump the sample under test and the reagent into the buffer region 40 through the first flow path selection valve 21 in a negative pressure-driven manner.

In some embodiments, the pump group 22 pumps the sample under test and/or the reagent in the buffer region 40 into the fluid channel 11 from the outlet 13 of the fluid channel 11 through the first flow path selection valve 21 in a positive pressure-driven manner.

In this way, the pump group 22 can generate positive pressure to drive the sample under test and/or the reagent to move from the buffer region 40 toward the fluid channel 11 through the first flow path selection valve 21, enabling the transportation of the sample under test and/or the reagent.

Specifically, the pump group 22 may pump the sample under test in the buffer region 40 into the fluid channel 11 from the outlet 13 of the fluid channel 11 through the first flow path selection valve 21 in a positive pressure-driven manner. The pump group may also pump the reagent in the buffer region 40 into the fluid channel 11 from the outlet 13 of the fluid channel 11 through the first flow path selection valve 21 in a positive pressure-driven manner. The pump group may still pump the sample under test and the reagent in the buffer region 40 into the fluid channel 11 from the outlet 13 of the fluid channel 11 through the first flow path selection valve 21 in a positive pressure-driven manner.

Referring to FIG. 1, in some embodiments, the pump valve assembly 20 further includes a second flow path selection valve 23.

The second flow path selection valve 23 is located upstream of the flow cell 10, and the second flow path selection valve 23 is configured to communicate a reagent kit 50 with the first flow path selection valve 21. Before a plurality of samples under test are aspirated from the sample cartridge 30 via the first flow path selection valve 21 and the pump group 22, the method further includes:
aspirating a reagent from the reagent kit 50 via the first flow path selection valve 21, the second flow path selection valve 23, and the pump group 22, and pumping the reagent into the sample cartridge 30 to mix with the sample under test in the sample cartridge 30.

**In** some embodiments, the first flow path selection valve 21, the second flow path selection valve 23, and the pump group 22 are configured to aspirate a reagent from the reagent kit 50 and pump the reagent into the sample cartridge 30 to mix with the sample under test in the sample cartridge 30.

In some embodiments, the processor is configured to aspirate a reagent from the reagent kit 50 via the first flow path selection valve 21, the second flow path selection valve 23, and the pump group 22 and pump the reagent into the sample cartridge 30 to mix with the sample under test in the sample cartridge 30.

In this way, the reagent kit 50 and the sample cartridge 30 can be communicated via the first flow path selection valve 21 and the second flow path selection valve 23, enabling the control of the flow path for the reagent.

Specifically, as shown by the dot-dash line in FIG. 1, the second flow path selection valve 23 communicates with the reagent kit 50. The first flow path selection valve 21 may communicate the pump group 22 with the second flow path selection valve 23, such that the pump group 22 aspirates a reagent from the reagent kit 50. The first flow path selection valve 21 may also communicate the pump group 22 with the sample cartridge 30, such that the pump group 22 drives the reagent into the sample cartridge 30 to mix with the sample under test in the sample cartridge 30.

Referring to FIG. 3, in some embodiments, a plurality of buffer regions 40 are arranged between the first flow path selection valve 21 and the pump group 22, and the plurality of buffer regions 40 are arranged in one-to-one correspondence with a plurality of fluid channels 11.

Aspirating the reagent from the reagent kit 50 via the first flow path selection valve 21, the second flow path selection valve 23, and the pump group 22 and pumping the reagent into the sample cartridge 30 to mix with the sample under test in the sample cartridge 30 includes:
**In** S11, a reagent is pumped by the pump group 22 from the reagent kit 50 into each buffer region 40 through the first flow path selection valve 21 and the second flow path selection valve 23, and the reagent in each buffer region 40 is pumped into the sample cartridge 30 through the first flow path selection valve 21 to mix with the corresponding sample under test in the sample cartridge 30.

**In** some embodiments, the pump group 22 is configured to pump a reagent from the reagent kit 50 into each buffer region 40 through the first flow path selection valve 21 and the second flow path selection valve 23 and pump the reagent in each buffer region 40 into the sample cartridge 30 through the first flow path selection valve 21 to mix with the corresponding sample under test in the sample cartridge 30.

**In** some embodiments, the processor is configured to pump, via the pump group 22, a reagent from the reagent kit 50 into each buffer region 40 through the first flow path selection valve 21 and the second flow path selection valve 23 and pump the reagent in each buffer region 40 into the sample cartridge 30 through the first flow path selection valve 21 to mix with the corresponding sample under test in the sample cartridge 30.

In this way, the first flow path selection valve 21 can select the reagent kit 50 and the sample cartridge 30 to communicate with each buffer region 40, enabling the control of switching flow paths for the reagent.

Specifically, the second flow path selection valve 23 communicates the reagent kit 50 with the first flow path selection valve 21. The first flow path selection valve 21 may communicate each buffer region 40 with the second flow path selection valve 23, such that the pump group 22 pumps a reagent from the reagent kit 50 into each buffer region 40 through the second flow path selection valve 23 and the first flow path selection valve 21. The first flow path selection valve 21 may also communicate the pump group 22 with the sample cartridge 30, such that the pump group 22 pumps the reagent in each buffer region 40 into the sample cartridge 30 through the first flow path selection valve 21 to mix with the corresponding sample under test in the sample cartridge 30.

Referring to FIG. 3, in some embodiments, aspirating the plurality of samples under test from the sample cartridge 30 via the first flow path selection valve 21 and the pump group 22 and allowing each sample under test to enter the fluid channel 11 from the outlet 13 of the corresponding fluid channel 11 includes:
In S21, the mixture of each sample under test and the reagent is pumped by the pump group 22 into the corresponding buffer region 40 through the first flow path selection valve 21, and the mixture of the sample under test and the reagent in each buffer region 40 is pumped into the fluid channel 11 from the outlet 13 of the corresponding fluid channel 11 through the first flow path selection valve 21.

In some embodiments, the pump group 22 is configured to pump the mixture of each sample under test and the reagent into the corresponding buffer region 40 through the first flow path selection valve 21 and pump the mixture of the sample under test and the reagent in each buffer region 40 into the fluid channel 11 from the outlet 13 of the corresponding fluid channel 11 through the first flow path selection valve 21.

In some embodiments, the processor is configured to pump, via the pump group 22, the mixture of each sample under test and the reagent into the corresponding buffer region 40 through the first flow path selection valve 21 and pump the mixture of the sample under test and the reagent in each buffer region 40 into the fluid channel 11 from the outlet 13 of the corresponding fluid channel 11 through the first flow path selection valve 21.

In this way, the first flow path selection valve 21 can select the sample cartridge 30 and the fluid channel 11 to communicate with each buffer region 40, enabling the control of switching flow paths for the mixture of each sample under test and the reagent.

Specifically, the first flow path selection valve 21 may communicate each buffer region 40 with the sample cartridge 30, such that the pump group 22 pumps the mixture of each sample under test and the reagent from the sample cartridge 30 into each buffer region 40 through the first flow path selection valve 21. The first flow path selection valve 21 may also communicate each buffer region 40 with the outlet 13 of the corresponding fluid channel 11, such that the pump group 22 pumps the mixture of the sample under test and the reagent in each buffer region 40 into the fluid channel 11 from the outlet 13 of the corresponding fluid channel 11 through the first flow path selection valve 21.

In some embodiments, the pump group 22 pumps the mixture of each sample under test and the reagent into one corresponding buffer region 40 through the first flow path selection valve 21 in a negative pressure-driven manner.

In this way, the pump group 22 can generate negative pressure to drive the mixture of each sample under test and the reagent to move toward the corresponding buffer region 40, enabling the transportation of the mixtures of the plurality of samples under test and the reagent.

In some embodiments, the pump group 22 pumps the mixture of the sample under test and the reagent in each buffer region 40 into the fluid channel 11 from the outlet 13 of the corresponding fluid channel 11 through the first flow path selection valve 21 in a positive pressure-driven manner.

In this way, the pump group 22 can generate positive pressure to drive the mixture of each sample under test and the reagent to move from each buffer region 40 toward the corresponding fluid channel 11, enabling the transportation of the mixtures of the plurality of samples under test and the reagent. Specifically, the pump group 22 may pump the reagent from the reagent kit 50 into each buffer region 40 through the second flow path selection valve 23 and the first flow path selection valve 21 in a negative pressure-driven manner, and then pump the reagent in each buffer region 40 into the sample cartridge 30 through the first flow path selection valve 21 in a positive pressure-driven manner to mix with the corresponding sample under test in the sample cartridge 30. Next, the pump group pumps the mixture of each sample under test and the reagent from the sample cartridge 30 into each buffer region 40 through the first flow path selection valve 21 in a negative pressure-driven manner, and finally pumps the mixture of the sample under test and the reagent in each buffer region 40 into the fluid channel 11 from the outlet 13 of the corresponding fluid channel 11 through the first flow path selection valve 21 in a positive pressure-driven manner.

Referring to FIG. 1, in some embodiments, the pump valve assembly 20 further includes a second flow path selection valve 23 and a manifold assembly 24.

The second flow path selection valve 23 and the manifold assembly 24 are located upstream of the flow cell 10. The second flow path selection valve 23 is configured to communicate the reagent kit 50 with the manifold assembly 24, and/or communicate the reagent kit 50 with the first flow path selection valve 21. The manifold assembly 24 communicates with the fluid channel 11 of the flow cell 10.

A single sample under test and/or a reagent are aspirated from the sample cartridge 30 and/or the reagent kit
50 via the second flow path selection valve 23, the manifold assembly 24, and the pump group 22, and the single sample under test and/or the reagent are allowed to enter the fluid channel 11 from the inlet 12 of each fluid channel 11.

In some embodiments, the second flow path selection valve 23, the manifold assembly 24, and the pump group 22 are configured to aspirate a single sample under test and/or a reagent from the sample cartridge 30 and/or the reagent kit 50 and allow the single sample under test and/or the reagent to enter the fluid channel 11 from the inlet 12 of each fluid channel 11.

In some embodiments, the processor is configured to aspirate a single sample under test and/or a reagent from the sample cartridge 30 and/or the reagent kit 50 via the second flow path selection valve 23, the manifold assembly 24, and the pump group 22 and allow the single sample under test and/or the reagent to enter the fluid channel 11 from the inlet 12 of each fluid channel 11.

In this way, the second flow path selection valve 23 can select the manifold assembly 24 and the first flow path selection valve 21 to communicate with the reagent kit 50, enabling the control of switching flow paths for the reagent. In addition, the manifold assembly 24 can divert a single sample under test and/or a reagent, such that the sample under test that enters different fluid channels 11 through the inlet 12 of each fluid channel 11 is the same sample under test or the same reagent.

Specifically, as shown by the double dot-dash line in FIG. 1, the manifold assembly 24 communicates with the inlet 12 of the fluid channel 11. The second flow path selection valve 23 may communicate the reagent kit 50 with the manifold assembly 24, such that the pump group 22 pumps the reagent in the reagent kit 50 into the fluid channel 11 from the inlet 12 of each fluid channel 11 through the second flow path selection valve 23 and the manifold assembly 24. The second flow path selection valve 23 may communicate the sample cartridge 30 with the manifold assembly 24, such that the pump group 22 pumps the sample under test in the sample cartridge 30 into the fluid channel 11 from the inlet 12 of each fluid channel 11 through the second flow path selection valve 23 and the manifold assembly 24.

In one embodiment, the liquid path system 100 includes a waste liquid reservoir 60. The waste liquid reservoir 60 is connected to the manifold assembly 24 and the pump group 22. The waste liquid reservoir 60 is configured to store or discharge all of or a portion of the waste liquid of the liquid path system 100. The waste liquid reservoir 60 may communicate with the inlet 12 of each fluid channel 11 via the manifold assembly 24, such that the waste liquid after reaction in the fluid channel 11 can flow from the inlet 12 of each fluid channel 11 into the waste liquid reservoir 60. The waste liquid reservoir 60 may also communicate with the outlet 13 of each fluid channel 11 via the pump group 22, such that the waste liquid after reaction in the fluid channel 11 can flow from the outlet 13 of each fluid channel 11 into the waste liquid reservoir 60. One solenoid valve 70 may be arranged between the waste liquid reservoir 60 and the manifold assembly 24. When the solenoid valve 70 is energized, the pump group 22 can drive the waste liquid in each fluid channel 11 to flow from the inlet 12 of each fluid channel 11 through the manifold assembly 24 into the waste liquid reservoir 60. When the solenoid valve 70 is de-energized, the pump group 22 can drive the waste fluid in each fluid channel 11 to flow from the outlet 13 of each fluid channel 11 through the pump group 22 into the waste liquid reservoir 60.

In some embodiments, the pump group 22 pumps a single sample under test and/or a reagent from the inlet 12 of each fluid channel 11 into the fluid channel 11 in a negative pressure-driven manner.

In this way, the pump group 22 can generate negative pressure to drive the single sample under test and/or the reagent to move toward each fluid channel 11, enabling the transportation of the single sample under test and/or the reagent.

Specifically, the pump group 22 may pump a single sample under test from the sample cartridge 30 into each fluid channel 11 through the second flow path selection valve 23 and the manifold assembly 24 in a negative pressure-driven manner. The pump group 22 may also pump a reagent from the reagent kit 50 into each fluid channel 11 through the second fluid path selection valve 23 and the manifold assembly 24 in a negative pressure-driven manner. The pump group 22 may still pump a single sample under test and a reagent into each fluid channel 11 through the second flow path selection valve 23 and the manifold assembly 24 in a negative pressure-driven manner.

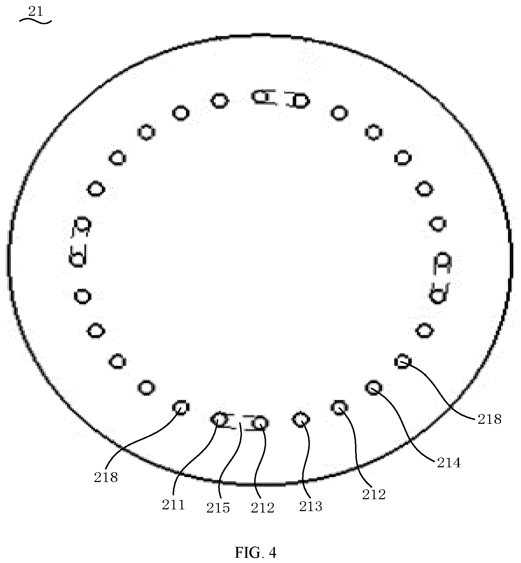

Referring to FIGS. 1 and 4, in some embodiments, the first flow path selection valve 21 includes a plurality of sets of ports. Each set of ports is configured to control the inflow of one fluid channel 11. Each set of ports includes a first port 211, a second port 212, a third port 213, and a fourth port 214. The first port 211 is connected to the outlet 13 of the fluid channel 11; the second port 212 is connected to the buffer region 40; the third port 213 is connected to the sample cartridge 30; the fourth port 214 is connected to the reagent kit 50. Any one of the first port 211, the third port 213, and the fourth port 214 selectively communicates with the second port 212.

In this way, the buffer region 40 can be selectively communicated with the outlet 13 of the fluid channel 11, the sample cartridge 30, and the reagent kit 50 via the first flow path selection valve 21, enabling the control of switching flow paths for the sample under test and/or the reagent. The plurality of sets of ports may simultaneously control the inflow of the plurality of fluid channels 11, reducing the number of solenoid valves 70 used, and thus reducing the cost and the space occupied by the liquid path system 100. Specifically, the first port 211, the second port 212, and the third port 213 may serve as a liquid outlet or a liquid inlet of the first flow path selection valve 21. The fourth port 214 may serve as a liquid inlet of the first flow path selection valve 21. There may be two, three, four, five, six, or more sets of ports. The number of the sets of ports and the number of the fluid channels 11 may be the same, and the spacing between the plurality of sets of ports may be the same. In one embodiment, there are four fluid channels 11 and the first flow path selection valve 21 includes four sets of ports. Four first ports 211 are respectively connected to the outlets 13 of the four fluid channels 11. The first flow path selection valve 21 can simultaneously control the flow path of the fluid in the four fluid channels 11. The port may be of a regular shape, such as a circle or a polygon, or of an irregular shape. The shape of each port may be the same or different. In the embodiments of the present disclosure, to facilitate the formation and manufacturing of the port and/or the connection thereof with a common tube, the port is circular in shape.

Referring to FIG. 1, in some embodiments, the liquid path system 100 includes a plurality of first conduits 81. The plurality of first conduits 81 are arranged in one-to-one correspondence with a plurality of first ports 211. Both ends of each first conduit 81 respectively communicate with the outlet of one fluid channel 11 and one first port 211.

In this way, the sample under test and/or the reagent in each buffer region 40 can flow from the second port 212 and the first port 211 into the corresponding fluid channel 11 through the first conduit 81, enabling the transportation of the sample under test and/or the reagent.

Specifically, the first conduit 81 may be a tube for transporting fluid. The fluid includes but is not limited to a gas, a liquid, and the like. The cross-section of the first conduit 81 may be a circular shape, and the length and diameter dimensions of the first conduit 81 may be set according to actual requirements. The number of the first conduits 81 may be the same as the number of the fluid channels 11, and the plurality of first conduits 81 are respectively connected to the plurality of fluid channels 11 and the plurality of first ports 211 in one-to-one correspondence.

Referring to FIG. 1, in some embodiments, the liquid path system 100 includes a plurality of second conduits 82. The plurality of second conduits 82 are arranged in one-to-one correspondence with a plurality of third ports 213. Both ends of each second conduit 82 respectively communicate with the sample cartridge 30 and one third port 213, and each second conduit 82 is configured to allow one sample under test in the sample cartridge 30 to enter the corresponding buffer region 40 through the first flow path selection valve 21.

In this way, the sample under test in the sample cartridge 30 can flow from the plurality of first ports 211 into a plurality of buffer regions 40 through the plurality of second conduits 82, enabling the transportation of the sample under test.

Specifically, the second conduit 82 may be a tube for transporting fluid. The fluid includes but is not limited to a gas, a liquid, and the like. The cross-section of the second conduit 82 may be a circular shape, and the length and diameter dimensions of the second conduit 82 may be set according to actual requirements. The number of the second conduits 82 may be the same as the number of the fluid channels 11. The plurality of second conduits 82 are respectively connected to a plurality of reservoirs of the sample cartridge 30 in one-to-one correspondence. Each reservoir is configured to store a single sample under test.

Referring to FIG. 1, in some embodiments, the liquid path system 100 includes a third conduit 83. The third conduit 83 is arranged in one-to-one correspondence with a plurality of fourth ports 214. Both ends of the third conduit 83 respectively communicate with the reagent kit 50 and each fourth port 214. The third conduit 83 is configured to allow the reagent in the reagent kit 50 to enter each buffer region 40 through the first flow path selection valve 21.

In this way, the reagent in the reagent kit 50 can flow from the plurality of fourth ports 214 into a plurality of buffer regions 40 through the third conduit 83, enabling the transportation of the reagent.

Specifically, the third conduit 83 may be a tube for transporting fluid. The fluid includes but is not limited to a gas, a liquid, and the like. The cross-section of the third conduit 83 may be a circular shape, and the length and diameter dimensions of the third conduit 83 may be set according to actual requirements. The third conduit 83 is provided with a liquid inlet 831 and a plurality of liquid outlets 832. The number of the liquid outlets 832 may be the same as the number of the fluid channels 11. The liquid inlet 831 of the third conduit 83 is connected to the reagent kit 50, and the plurality of liquid outlets 832 of the third conduit 83 are respectively connected to the plurality of fourth ports 214 in one-to-one correspondence.

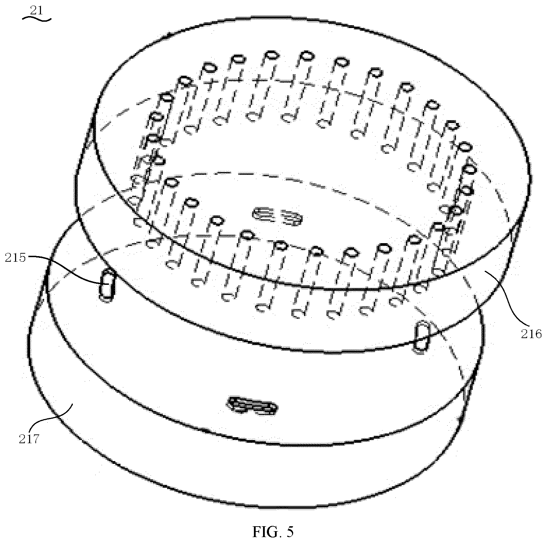

Referring to FIGS. 4 and 5, in some embodiments, the first flow path selection valve 21 includes a plurality of communication grooves 215. The second port 212 communicates with one of the first port 211, the third port 213, and the fourth port 214 via the communication groove 215.

In this way, the buffer region 40 can selectively communicate with the outlet 13 of the fluid channel 11, the sample cartridge 30, and the reagent kit 50 via the communication groove 215, enabling the control of the flow path for the sample under test and/or the reagent.

Specifically, the number of the communication grooves 215 may be the same as the number of the fluid channels 11, and one communication groove 215 corresponds to one set of ports to control the flow of the fluid in one fluid channel 11. There may be four communication grooves 215. The four communication grooves 215 may respectively communicate with four second ports 212 and four first ports 211, or respectively communicate with four second ports 212 and four third ports 213, or respectively communicate with four second ports 212 and four fourth ports 214.

Referring to FIGS. 4 and 5, in some embodiments, the first flow path selection valve 21 includes a stator 216 and a rotor 217 rotatably arranged with the stator 216. The stator 216 is provided with a plurality of sets of ports and each set of ports includes a first port 211, a second port 212, a third port 213, and a fourth port 214. The rotor 217 is provided with a communication groove 215.

In this way, by rotating the rotor 217, the communication groove 215 can selectively communicate the buffer region 40 with the outlet 13 of the fluid channel 11, the sample cartridge 30, and the reagent kit 50, enabling the control of switching flow paths for the sample under test and/or the reagent.

Specifically, the first port 211, the second port 212, the third port 213, and the fourth port 214 may be a circular through hole. The through hole penetrates the stator 216 in the thickness direction of the stator 216. The stator 216 and the rotor 217 may be coaxially arranged, or in other words, the central axis of the stator 216 and the central axis of the rotor 217 coincide. The communication groove 215 may be in a bent shape, a curved shape, or the like, and the specific shape of the communication groove 215 is not limited herein. Referring to FIGS. 4 and 5, in some embodiments, the first port 211, the second port 212, the third port 213, and the fourth port 214 are spaced apart from each other in the circumferential direction of the stator 216. In this way, the first port 211, the second port 212, the third port 213, and the fourth port 214 are spaced apart from each other in the circumferential direction of the stator 216, such that the second port 212 communicates with one of the first port 211, the third port 213, and the fourth port 214 via the communication groove 215.

Specifically, each set of ports may include one first port 211, two second ports 212, one third port 213, and one fourth port 214. The first port 211, the third port 213, and the fourth port 214 are respectively distributed on both sides of the two second ports 212, for example, one of the second ports 212 is located between the first port 211 and the third port 213, and the other second port 212 is located between the third port 213 and the fourth port 214. That is, the first port 211, the second port 212, the third port 213, the second port 212, and the fourth port 214 are sequentially arranged clockwise or counterclockwise in the circumferential direction of the stator 216. **In** one embodiment, two second ports 212 communicate with the same buffer region 40 via a Y-shaped conduit outside the first flow path selection valve 21. By rotating the first flow path selection valve 21, the communication groove 215 communicates one of the second ports 212 with the third port 213 or communicates the other second port 212 with the fourth port 214. For example, via the Y-shaped conduit, the reagent, the sample under test, or the mixture thereof can enter the buffer region 40 through the fourth port 214, the communication groove 215, and one of the two second ports 212, and the reagent, the sample under test, or the mixture thereof in the buffer region 40 can enter the corresponding fluid channel through the other of the two second ports 212, the communication groove 215, and the first port 212. **In** one embodiment, the stator 216 is provided with a plug 218, and the plug 218 is located at both sides of each set of ports. When the communication groove 215 communicates the plug 218 with an adjacent port, the control of fluid interruption can be enabled.

Referring to FIGS. 4 and 5, in some embodiments, there are a plurality of communication grooves 215, and the plurality of communication grooves 215 are spaced apart from each other in the circumferential direction of the rotor 217.

**In** this way, the plurality of communication grooves 215 can simultaneously communicate with two adjacent ports in the plurality of sets of ports and control a plurality of liquid paths at the same time, reducing the number of the solenoid valves 70 used, and thus reducing the cost and the space occupied by the liquid path system 100.

Specifically, the length of the communication groove 215 may be the distance between two adjacent ports, such that the communication groove 215 can communicate with two adjacent ports and ensure that fluid enters from one port and flows out from another port, achieving accurate control of the fluid flow path. This prevents the fluid from entering from a plurality of ports or flowing out from a plurality of ports, thereby reducing the risk of cross-contamination between different samples under test and improving the sequencing quality. The spacing between two adjacent communication grooves 215 is the same, such that when one of the communication grooves 215 communicates with the first port 211 the second port 212, the remaining communication grooves 215 can communicate with the corresponding first port 211 and second port 212.

Referring to FIG. 1, in some embodiments, the second flow path selection valve 23 includes a common port 231 and at least one connection port 232. The common port 231 communicates with one end of the third conduit 83, and the connection port 232 communicates with the reagent kit 50.

**In** this way, the reagent kit 50 and the third conduit 83 can be communicated via the common port 231 and the connection port 232, enabling the control of the flow path for the reagent.

Specifically, there may be two connection ports 232. One connection port 232 communicates with the reagent kit 50, and the other connection port 232 communicates with the sample cartridge 30. The common port 231 selectively communicates with one of the connection ports 232, such that the common port 231 can selectively communicate with the reagent kit 50 or the sample cartridge 30. For example, when the first flow path selection valve 21 communicates the buffer region 40 with the third conduit 83 and the second flow path selection valve 23 communicates the reagent kit 50 with the third conduit 83, the reagent in the reagent kit 50 can flow from the third conduit 83 into the buffer region 40 through the first flow path selection valve 21; when the first flow path selection valve 21 communicates the buffer region 40 with the first conduit 81 and the second flow path selection valve 23 communicates the reagent kit 50 with the manifold assembly 24, the reagent in the reagent kit 50 can enter the fluid channel **11** from the inlet 12 of the fluid channel 11 through the manifold assembly 24; when the first flow path selection valve 21 communicates the buffer region 40 with the first conduit 81 and the second flow path selection valve 23 communicates the sample cartridge 30 with the manifold assembly 24, the sample under test in the sample cartridge 30 can enter the fluid channel **11** from the inlet 12 of the fluid channel **11** through the manifold assembly 24.

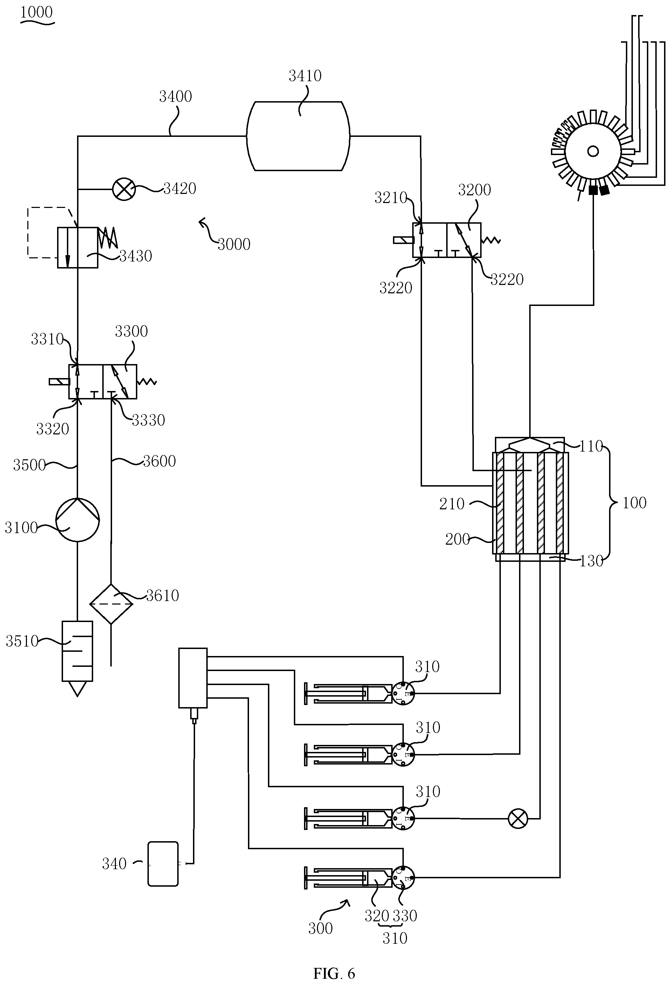

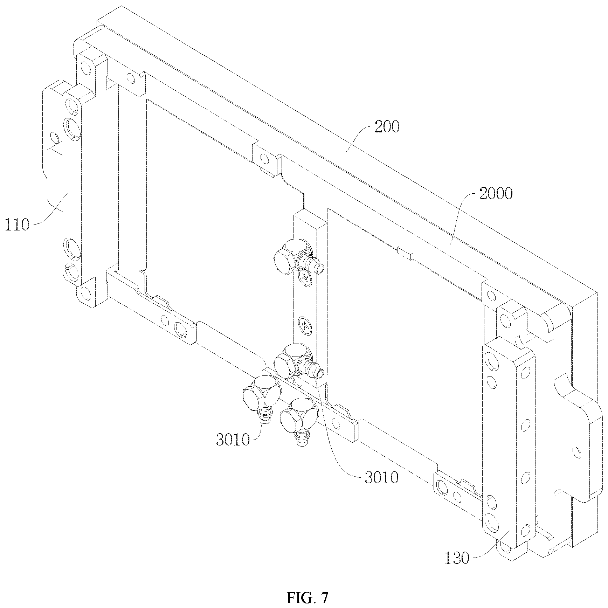

Referring to FIGS. 6-10, in some embodiments, the liquid path system 1000 according to the present disclosure includes a manifold assembly 100, a fluid flow unit 200, and a pump group 300. The fluid flow unit 200 includes at least one fluid channel 210, and the fluid flow unit 200 communicates with the manifold assembly 100 via the fluid channel 210. The pump group 300 is connected to the fluid flow unit 200, and the pump group 300 is configured to provide power, allowing the liquid to enter the liquid path system 1000 and flow back and forth between the manifold assembly 100 and the fluid channel 210.

**In** the liquid path system 1000 according to the embodiments of the present disclosure, the pump group 300 drives the liquid to flow back and forth between the manifold assembly 100 and the fluid channel 210, such that the residue on the manifold assembly 100 can be sufficiently mixed and/or replaced, and the crystals formed by the residue on the manifold assembly 100 can also be sufficiently redissolved, thereby facilitating the cleaning of the manifold assembly 100 and improving the sequencing effect.

Specifically, the manifold assembly 100 may be composed of a plurality of manifold members. **In** some embodiments, the liquid path system 1000 includes a support member and a resilient member. The resilient member is connected to the manifold assembly 100 and the support member respectively to drive the manifold assembly 100 to abut against the fluid flow unit 200.

The fluid flow unit 200 may be a flow cell, a sequencing chip, or an element similar to the flow cell or the sequencing chip. It may also be other elements capable of communicating with the manifold assembly 100 to provide a passage for the flow of liquid, such as a tube member with a fluid channel 210 for communicating with manifold assembly 100 to provide a passage for the flow of liquid, thus achieving the cleaning of the manifold assembly 100. For example, when the fluid flow unit 200 is the above-mentioned flow cell 10, the liquid path system 1000 can communicate with the manifold assembly 100 via the flow cell 10 to provide a passage for the flow of liquid, thus achieving the cleaning of the manifold assembly 100. When the fluid flow unit 200 is an element similar to the flow cell 10 or other elements, the element can communicate with the manifold assembly 100 by replacing the flow cell 10 in the liquid path system to provide a passage for the flow of liquid, thus achieving the cleaning of the manifold assembly 100. The cross-section of the fluid channel 210 may be a circular shape or a square shape. A plurality of fluid channels 210 may be spaced apart from each other in the width direction of the flow cell. There may be a plurality of fluid channels 210, for example, two, three, four, or five fluid channels.

The pump group 300 includes but is not limited to equipment capable of providing power and a pipeline for transmitting power. The pump group 300 can be connected to the manifold assembly 100 via a conduit to drive liquid to flow back and forth between the manifold assembly 100 and the fluid channel 210.

The liquid may be, for example, a cleaning solution, which includes but is not limited to one or more of an organic solvent, an inorganic solvent, and water. The residue may be, for example, a sequencing reagent of a certain concentration. When the sequencing is finished and the sequencing chip is removed, the residue will remain on the manifold assembly 100 and the residue is prone to crystallization when exposed to an open environment. Through the back-and-forth flow of the liquid between the manifold assembly 100 and the fluid channel 210, the residue can be diluted and replaced, and/or the crystal formed by the residue can be dissolved.

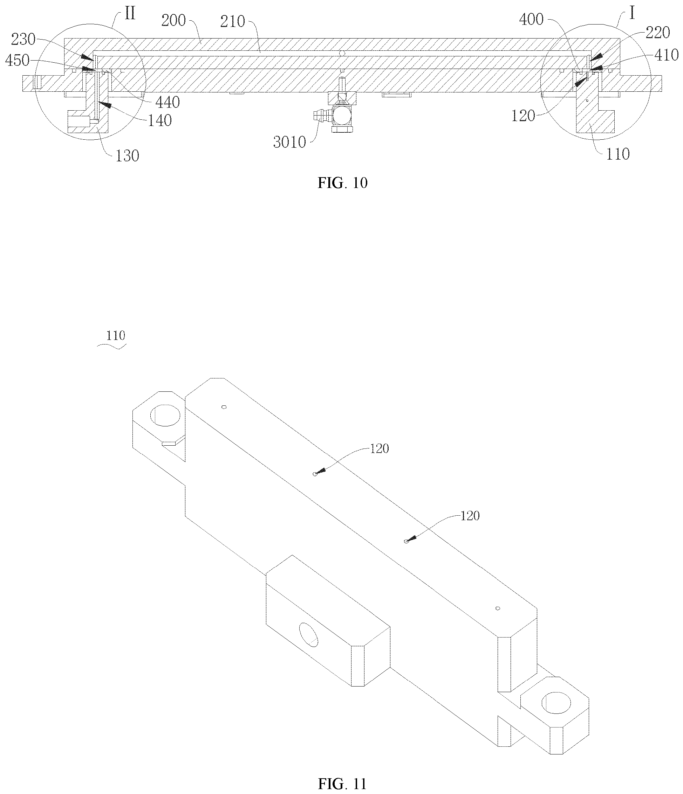

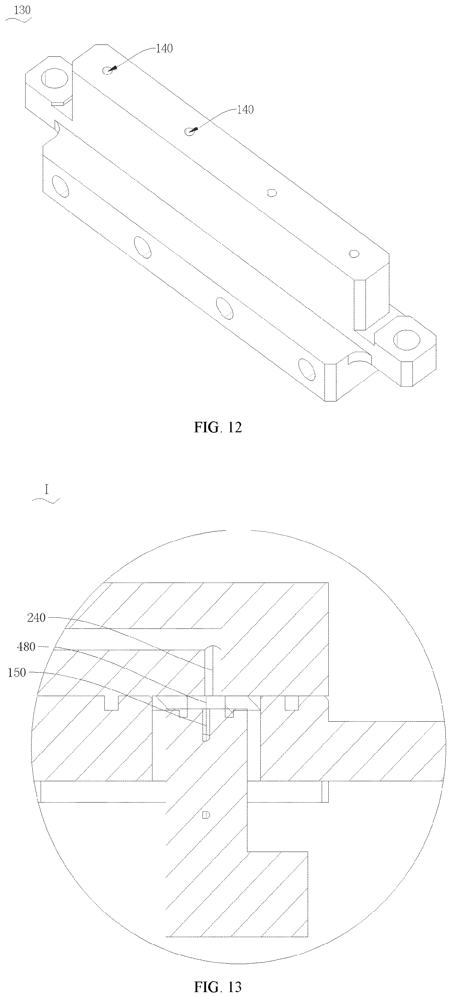

Referring to FIGS. 10-12, in some embodiments, the manifold assembly 100 includes a first manifold member 110 and a second manifold member 130. The first manifold member 110 is provided with at least one liquid inlet 120, and the second manifold member 130 is provided with at least one liquid outlet 140. The liquid inlet 120 and the liquid outlet 140 are arranged in one-to-one correspondence. The fluid flow unit 200 is located between the first manifold member 110 and the second manifold member 130. Each fluid channel 210 includes one fluid channel inlet 220 and one fluid channel outlet 230. The first manifold member 110 communicates with the fluid channel 210 via the liquid inlet 120 and the fluid channel inlet 220. The second manifold member 130 communicates with the fluid channel 210 via the liquid outlet 140 and the fluid channel outlet 230.

**In** this way, liquid can enter the fluid channel 210 from the liquid inlet 120 of the first manifold member 110 and the fluid channel inlet 220 and flow out of the fluid channel 210 from the fluid channel outlet 230 and the liquid outlet 140 of the second manifold member 130, enabling the back-and-forth flow of the liquid between the manifold assembly 10 and the fluid channel 210.

Specifically, the first manifold member 110 and the second manifold member 130 may be made of materials such as metal or plastic, and the first manifold member 110 and the second manifold member 130 may be integrally formed by injection molding with two rectangular parallelepipeds. There may be a plurality of liquid inlets 120 on the first manifold member 110, for example, two, three, four, or five liquid inlets. The plurality of liquid inlets 120 are spaced apart from each other in the length direction of the first manifold member 110, and the liquid inlet 120 may be of a circular shape or a square shape. There may be a plurality of liquid outlets 140 on the second manifold member 130, for example, two, three, four, or five liquid outlets. The plurality of liquid outlets 140 are spaced apart from each other in the length direction of the second manifold member 130, and the liquid outlet 140 may be of a circular shape or a square shape. The fluid channel inlet 220 and the fluid channel outlet 230 are respectively located at both ends of the fluid channel 210. The dimension of the fluid channel inlet 220 may be greater than the dimension of the liquid inlet 120, and the dimension of the fluid channel outlet 230 may also be greater than the dimension of the liquid outlet 140, that is, when the fluid channel inlet 220, the fluid channel outlet 230, the liquid inlet 120, and the liquid outlet 140 are of a circular shape, the radius of the fluid channel inlet 220 may be greater than the radius of the liquid inlet 120, and the radius of the fluid channel outlet 230 may also be greater than the radius of the liquid outlet 140.

Referring to FIGS. 10, 13, and 14, in some embodiments, the fluid channel inlet 220 and the fluid channel outlet 230 are each provided with a first central axis 240, and the liquid inlet 120 and the liquid outlet 140 are each provided with a second central axis 150. The first central axis 240 of the fluid channel inlet 220 is arranged offset from the second central axis 150 of the liquid inlet 120, and the first central axis 240 of the fluid channel outlet 230 is arranged offset from the second central axis 150 of the liquid outlet 140.

**In** this way, the fluid channel inlet 220 and the liquid inlet 120 are eccentric, and the fluid channel outlet 230 and the liquid outlet 140 are eccentric, such that a turbulent flow is created when liquid flows from the liquid inlet 120 toward the fluid channel inlet 220 and from the fluid channel outlet 230 toward the liquid outlet 140, which can sufficiently mix and/or replace the residue remaining at the liquid inlet 120 and the liquid outlet 140 and can also sufficiently redissolve the crystal formed by the residue remaining at the liquid inlet 120 and the liquid outlet 140, thereby facilitating the cleaning of the manifold assembly 100. Specifically, when the fluid channel inlet 220 and the fluid channel outlet 230 are of a circular shape, the first central axis 240 can be located at the center of the fluid channel inlet 220 and the fluid channel outlet 230; when the liquid inlet 120 and the liquid outlet 140 are of a circular shape, the second central axis 150 can be located at the center of the liquid inlet 120 and the liquid outlet 140. The first central axis 240 can be arranged parallel to the second central axis 150.

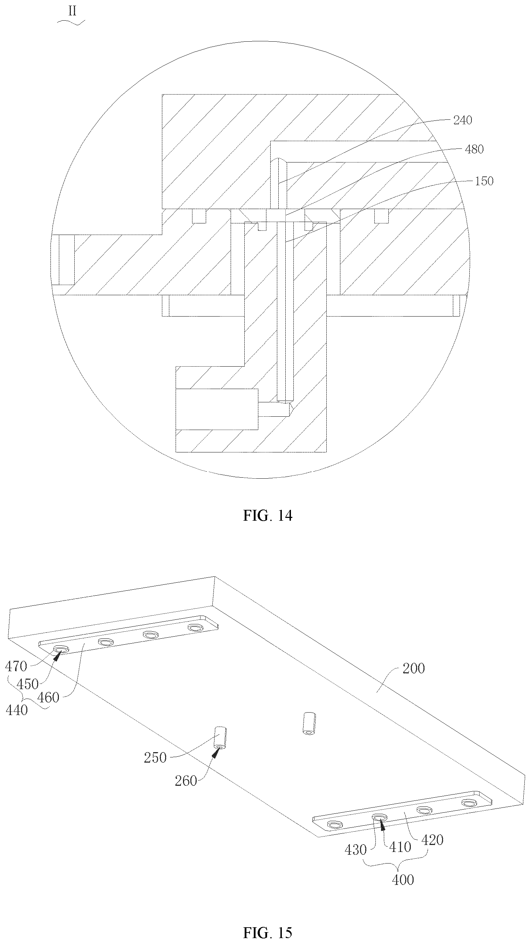

Referring to FIGS. 10 and 15, in some embodiments, a first sealing gasket 400 is arranged between the first manifold member 110 and the fluid flow unit 200, and a second sealing gasket 440 is arranged between the second manifold member 130 and the fluid flow unit 200. The first sealing gasket 400 is provided with at least one first liquid passage hole 410, and the second sealing gasket 440 is provided with at least one second liquid passage hole 450. The first liquid passage hole 410 is arranged in one-to-one correspondence with the liquid inlet 120, and the second liquid passage hole 450 is arranged in one-to-one correspondence with the liquid outlet 140. The liquid inlet 120 communicates with the fluid channel inlet 220 via the first liquid passage hole 410, and the liquid outlet 140 communicates with the fluid channel outlet 230 via the second liquid passage hole 450.

In this way, the arrangement of the first sealing gasket 400 between the first manifold member 110 and the fluid flow unit 200 can improve the sealing performance between the first manifold member 110 and the fluid flow unit 200 and prevent liquid from flowing out from the gap between the first manifold member 110 and the fluid flow unit 200, reducing liquid waste. The arrangement of the second sealing gasket 440 between the second manifold member 130 and the fluid flow unit 200 can improve the sealing performance between the second manifold member 130 and the fluid flow unit 200 and prevent liquid from flowing out from the gap between the second manifold member 130 and the fluid flow unit 200, thereby reducing liquid waste.

Specifically, the first sealing gasket 400 and the second sealing gasket 440 may be made of rubber, and the first sealing gasket 400 and the second sealing gasket 440 may be of a rectangular-parallelepiped shape. The first liquid passage hole 410 and the second liquid passage hole 450 may be a through hole. The first liquid passage hole 410 penetrates the first sealing gasket 400 in the thickness direction of the first sealing gasket 400, and the second liquid passage hole 450 penetrates the second sealing gasket 440 in the thickness direction of the second sealing gasket 440.

The first liquid passage hole 410 and the second liquid passage hole 450 may be of a circular shape. The radius of the first liquid passage hole 410 may be greater than the radius of the liquid inlet 120 or greater than the radius of the fluid channel inlet 220. The radius of the second liquid passage hole 450 may be greater than the radius of the liquid outlet 140 or greater than the radius of the fluid channel outlet 230. There may be a plurality of first liquid passage holes 410 and a plurality of second liquid passage holes 450, for example, two, three, or four first liquid passage holes or second liquid passage holes. The plurality of first liquid passage holes 410 may be spaced apart from each other in the length direction of the first sealing gasket 400, and the plurality of second liquid passage holes 450 may be spaced apart from each other in the length direction of the second sealing gasket 440.

Referring to FIGS. 10, 13, and 14, in some embodiments, the first liquid passage hole 410 and the second liquid passage hole 450 are each provided with a third central axis 480, and the third central axis 480 is coaxially arranged with the second central axis 150.

In this way, the coaxial arrangement of the third central axis 480 and the second central axis 150 facilitates the connection of the first sealing gasket 400 with the first manifold member 110 as well as facilitates the connection of the second sealing gasket 440 with the second manifold member 130, thereby improving operation convenience.

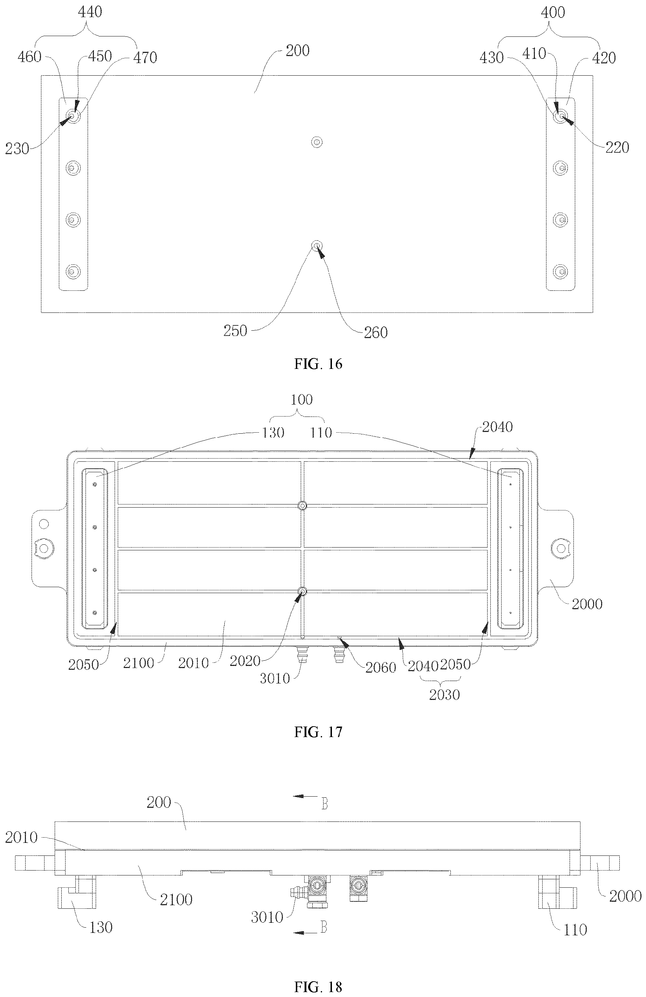

Specifically, the third central axis 480 may be coaxially arranged with the second central axis 150 and the second central axis 150 is arranged offset from the first central axis 240; or, the third central axis 480 may be coaxially arranged with the first central axis 240 and the second central axis 150 is arranged offset from the first central axis 240. The third central axis 480 may be arranged parallel to the second central axis 150. Referring to FIGS. 15 and 16, in some embodiments, the first sealing gasket 400 includes a first gasket body 420 and a first flange 430. A first liquid passage hole 410 is formed on the first gasket body 420, and the first flange 430 is arranged around the first liquid passage hole 410. The second sealing gasket 440 includes a second gasket body 460 and a second flange 470. A second liquid passage hole 450 is formed on the second gasket body 460, and the second flange 470 is arranged around the second liquid passage hole 450.

In this way, the first flange 430 can improve the sealing performance between the first manifold member 110 and the first sealing gasket 400 and prevent liquid from flowing out from the gap between the first gasket body 420 and the first manifold member 110, thereby reducing liquid waste. The second flange 470 can improve the sealing performance between the second manifold member 130 and the second sealing gasket 440 and prevent liquid from flowing out from the gap between the second gasket body 460 and the second manifold member 130, thereby reducing liquid waste.

Specifically, the first gasket body 420 and the second gasket body 460 may be of a rectangular-parallelepiped shape. The first flange 430 may extend in the thickness direction of the first gasket body 420 and be arranged close to the first manifold member 110. The first flange 430 may be integrally formed with the first gasket body 420 or formed by processing the first gasket body 420. The second flange 470 may extend in the thickness direction of the second gasket body 460 and be arranged close to the second manifold member 130, and the second flange 470 may be integrally formed with the second gasket body 460 or formed by processing the second gasket body 460. The thickness of the first gasket body 420 may be greater than the distance between the fluid flow unit 200 and the first manifold member 110, and the thickness of the second gasket body 460 may be greater than the distance between the fluid flow unit 200 and the second manifold member 130.

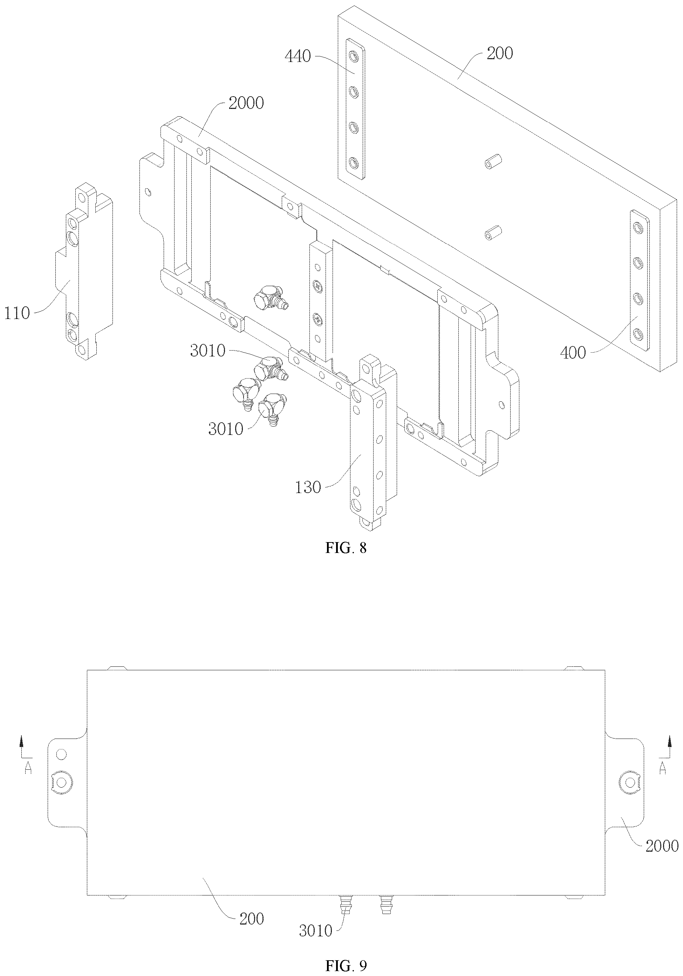

Referring to FIGS. 9 and 17, in some embodiments, the liquid path system 1000 includes a carrier apparatus 2000. The manifold assembly 100 and the fluid flow unit 200 are arranged on the carrier apparatus 2000, and the fluid flow unit 200 is detachably connected to the carrier apparatus 2000.

**In** this way, the arrangement of the manifold assembly 100 and the fluid flow unit 200 on the carrier apparatus 2000 can improve the stability of the fluid flow unit 200, thereby improving sequencing accuracy. Specifically, the carrier apparatus 2000 can carry the manifold assembly 100 and the fluid flow unit 200. The manifold assembly 100 can be snap-fitted on the carrier apparatus 2000, and the manifold assembly 100 can move, relative to the carrying apparatus, in the height direction of the carrying apparatus. The fluid flow unit 200 can be fixed on the carrier apparatus 2000 by using a detachable connection method, such as vacuum adsorption, magnetic attachment, adhesion, or snap-fitting.

Referring to FIGS. 17 and 18, in some embodiments, the carrier apparatus 2000 includes a carrier stage 2100. The stage 2100 is provided with a carrier surface 2010, and the fluid flow unit 200 is located on the carrier surface 2010.

**In** this way, the fluid flow unit 200 is located on the carrier surface 2010 and can communicate with the manifold assembly 100 on the carrier apparatus 2000.

Specifically, the carrier stage 2100 may be of a rectangular-parallelepiped shape, the carrier surface 2010 may be of a rectangular shape, and the dimension of the carrier surface 2010 may be less than the dimension of the fluid flow unit 200. The fluid flow unit 200 may be fixed on the carrier surface 2010 by using a detachable connection method, such as vacuum adsorption, magnetic attachment, adhesion, or snap-fitting.

Referring to FIGS. 15, 17, and 19, in some embodiments, the carrier surface 2010 is provided with a positioning hole 2020, and the fluid flow unit 200 is provided with a positioning pin 250. The positioning hole 2020 is in plug-fit with the positioning pin 250, such that the fluid flow unit 200 is detachably mounted on the carrier surface 2010.

**In** this way, through the plug-fit between the positioning hole 2020 and the positioning pin 250, the fluid flow unit 200 and the carrier stage 2100 can be precisely positioned, the assembly precision of the fluid flow unit 200 and the carrier stage 2100 is improved, and meanwhile, the fluid flowing unit 200 is convenient to assemble and disassemble, facilitating operation.

Specifically, the positioning hole 2020 can penetrate the carrier stage 2100 in the height direction of the carrier stage 2100. The positioning pin 250 can be arranged close to the carrier surface 2010 in the thickness direction of the fluid flow unit 200. The cross-section of the positioning hole 2020 and the positioning pin 250 may be a circular shape, and the radius of the positioning hole 2020 may be greater than the radius of the positioning pin 250. There may be a plurality of positioning holes 2020 and a plurality of positioning pins 250, for example, two, three, or four positioning holes or positioning pins, and the plurality of positioning holes 2020 and the plurality of positioning pins 250 are matched in one-to-one correspondence.

Referring to FIG. 17, in some embodiments, the carrier surface 2010 is concavely provided with a groove channel 2030.

**In** this way, negative pressure can be created at the opening of the groove channel 2030 on the carrier surface 2010, fixing the fluid flow unit 200 on the carrier surface 2010.

Specifically, the groove channel 2030 may be arranged on the carrier surface 2010 in a regular shape, such as a square shape or a circular shape, or arranged in an irregular shape. The shape and depth of the groove channel 2030 may be set according to actual requirements. The positioning hole 2020 may be arranged on the groove channel 2030.

Referring to FIG. 17, in some embodiments, the groove channel 2030 includes at least one first groove channel 2040 and at least one second groove channel 2050, and the first groove channel 2040 and the second groove channel 2050 communicate with each other.

**In** this way, by arranging at least one first groove channel 2040 and at least one second groove channel 2050 to communicate with each other, a plurality of openings can be formed on the carrier surface 2010 for adsorbing the fluid flow unit 200, thereby fixing the fluid flow unit 200 on the carrier surface 2010. Specifically, there may be one, two, three, four, etc., first groove channels 2040 and the second groove channels 2050. When there are a plurality of first groove channels 2040 and a plurality of second groove channels 2050, the adsorption range of the carrier surface 2010 can be further increased, so as to improve the stability of the carrier apparatus 2000 in adsorbing the fluid flow unit 200. The cross-section of the first groove channel 2040 and the second groove channel 2050 may be a rectangular shape or an arc shape. The positioning hole 2020 may be arranged on the first groove channel 2040, on the second groove channel 2050, or at a location where the first groove channel 2040 communicates with the second groove channel 2050.

Referring to FIG. 17, in some embodiments, the first groove channel 2040 and the second groove channel 2050 are crosswise arranged.

**In** this way, by crosswise arranging the first groove channel 2040 and the second groove channel 2050, the coverage of the first groove channel 2040 and the second groove channel 2050 on the carrier surface 2010 can be increased, which is applicable to fluid flow units 200 of different dimensions and improves the adsorption effect of the carrier apparatus 2000.

Specifically, the included angle between the first groove channel 2040 and the second groove channel 2050 may be an acute angle, a right angle, or an obtuse angle. The positioning hole 2020 may be arranged at the intersection of the first groove channel 2040 and the second groove channel 2050.

Referring to FIG. 17, in some embodiments, there are a plurality of first groove channels 2040, and the plurality of first groove channels 2040 are spaced apart from each other and arranged in parallel. There are a plurality of second groove channels 2050, and the plurality of second groove channels 2050 are spaced apart from each other and arranged in parallel. The first groove channels 2040 and the second groove channels 2050 are perpendicular to each other.

**In** this way, by arranging the plurality of first groove channels 2040 and the plurality of second groove channels 2050 to intersect with and perpendicular to each other, the first groove channels 2040 and the second groove channels 2050 can form openings in a mesh layout on the carrier surface 2010. When the fluid flow unit 200 is placed on the carrier surface 2010, the fluid flow unit 200 can be adsorbed and fixed by negative pressure generated at the openings of the first groove channels 2040 and the second groove channels 2050.

Specifically, there may be three, four, five, etc., first groove channels 2040, and there may be five, six, seven, etc., second groove channels 2050. The first groove channel 2040 may be parallel to the length direction of the carrier surface 2010, and the second groove channel 2050 may be parallel to the width direction of the carrier surface 2010; or, the first groove channel 2040 may be parallel to the width direction of the carrier surface 2010, and the second groove channel 2050 may be parallel to the length direction of the carrier surface 2010.

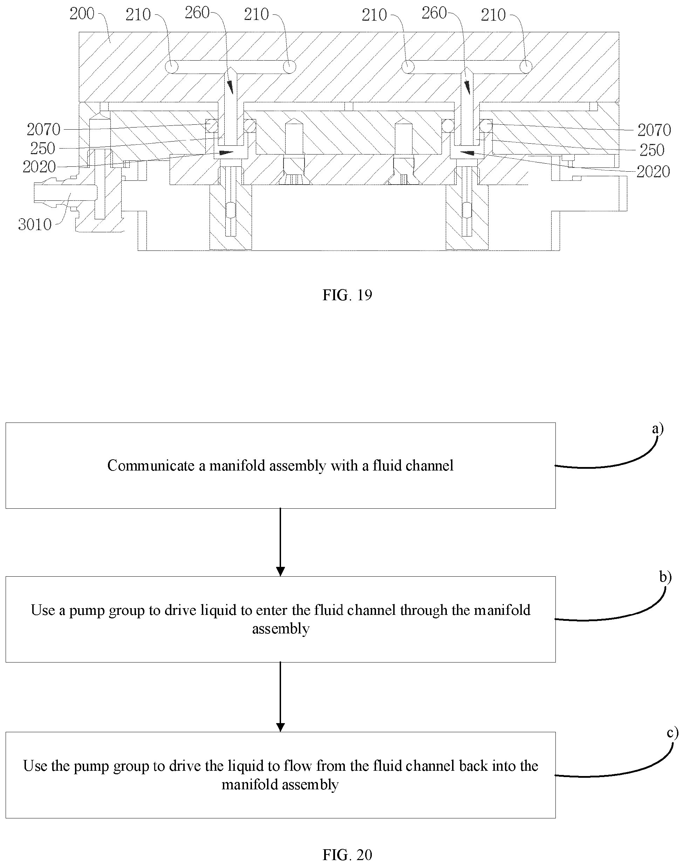

Referring to FIGS. 6 and 19, in some embodiments, the liquid path system 1000 includes a vacuum apparatus 3000. The fluid flow unit 200 is provided with an output port 260 communicating with the fluid channel 210. The vacuum apparatus 3000 communicates with the fluid channel 210 via the output port 260. In this way, the vacuum apparatus 3000 can generate negative pressure on the fluid channel 210 via the output port 260, and further generate negative pressure on the manifold assembly 100, thereby sucking away the residual liquid adhering to the manifold assembly 100.

Specifically, the vacuum apparatus 3000 includes but is not limited to a vacuum pump 3100, a vacuum chuck, or the like. The vacuum apparatus 3000 can be connected to the output port 260 of the fluid channel 210 via the gas path connector 3010. The output port 260 may be of a regular shape, such as a circle or a polygon, or of an irregular shape. In the embodiments of the present disclosure, to facilitate the formation and manufacturing of the output port 260 and/or the connection thereof with a common gas path connector 3010, the output port 260 is circular in shape. Referring to FIG. 17, in some embodiments, the groove channel 2030 is provided with an adsorption hole 2060. The vacuum apparatus 3000 can be connected to the adsorption hole 2060 via the gas path connector 3010 to generate negative pressure to extract the air from within the groove channel 2030, thereby adsorbing and fixing the fluid flow unit 200 on the carrier surface 2010.

The residual liquid may be, for example, a liquid mixed with residues and remaining around the liquid inlet 120 and/or the liquid outlet 140 of the manifold assembly 100. The residual liquid may be what remains after the fluid flow unit 200 is removed when the diameter of the first liquid passage hole 410 is greater than the diameter of the liquid inlet 120 and the diameter of the second liquid passage hole 450 is greater than the diameter of the liquid outlet 140. By sucking away the residual liquid with the vacuum apparatus 3000, the manifold assembly 100 is further cleaned, and the sequencing effect is improved.

Referring to FIGS. 6 and 19, in some embodiments, there are a plurality of fluid channels 210, and the output ports 260 of the plurality of fluid channels 210 communicate with the vacuum apparatus 3000.

In this way, the vacuum apparatus 3000 can generate negative pressure on the plurality of fluid channels 210 via the output port 260, sucking away the residual liquid adhering to the surfaces around the plurality of liquid inlets 120 and liquid outlets 140 of the manifold assembly 100 that are in contact with the first sealing gasket 400 and the second sealing gasket 440.

Specifically, there may be two, three, four, etc., fluid channels 210, and there may be a plurality of output ports 260, for example, two, three, or four output ports. When there are four fluid channels 210, there may be two or four output ports 260, that is, one fluid channel 210 may correspond to one output port 260, or two adjacent fluid channels 210 communicate with each other and the two communicating fluid channels 210 correspond to one output port 260.

Referring to FIGS. 6, 16, and 17, in some embodiments, the vacuum apparatus 3000 includes a vacuum pump 3100 and a first switching valve 3200. The first switching valve 3200 is provided with a first opening 3210 and two second openings 3220. The first switching valve 3200 communicates with the vacuum pump 3100 via the first opening 3210. The first switching valve 3200 communicates with the groove channel 2030 via one of the second openings 3220, and the first switching valve 3200 communicates with the output port 260 via the other of the second openings 3220.

In this way, via the first switching valve 3200, the groove channel 2030 can communicate with the vacuum pump 3100 to adsorb the fluid flow unit 200 onto the carrier stage 2100; or, the output port 260 can communicate with the vacuum pump 3100 to suck away the residual liquid adhering to the manifold assembly 100.

Specifically, the vacuum pump 3100 refers to a device or equipment that uses a mechanical, physical, chemical, or physicochemical method to evacuate a container to achieve a vacuum. The first switching valve 3200 may be a three-way solenoid valve or a valve having more channels. The first opening 3210 and the second opening 3220 may be of a regular shape, such as a circle or a polygon, or of an irregular shape. In the embodiments of the present disclosure, to facilitate the formation and manufacturing of the first opening 3210 and the second opening 3220 and/or the connection thereof with a common tube, the first opening 3210 and the second opening 3220 are circular in shape.

Referring to FIGS. 6, 16, and 17, in some embodiments, the vacuum apparatus 3000 further includes a second switching valve 3300. The second switching valve 3300 communicates with the first switching valve 3200, and the second switching valve 3300 is configured to switch between a first operating state and a second operating state. When the second switching valve 3300 is in the first operating state, the second switching valve 3300 communicates with the vacuum pump 3100, such that the vacuum pump 3100 can communicate with the groove channel 2030 or the output port 260 via the second switching valve 3300 and the first switching valve 3200 in sequence. When the second switching valve 3300 is in the second operating state, the communication between the second switching valve 3300 and the vacuum pump 3100 is cut off, and the second switching valve 3300 communicates with the external atmosphere, such that the groove channel 2030 or the output port 260 can communicate with the external atmosphere via the first switching valve 3200 and the second switching valve 3300 in sequence.

**In** this way, via the second switching valve 3300, the groove channel 2030 or the output port 260 can communicate with the vacuum pump 3100 to adsorb the fluid flow unit 200 onto the carrier stage 2100 or suck away the residual liquid adhering to the manifold assembly 100. **In** addition, via the second switching valve 3300, the groove channel 2030 or the output port 260 can communicate with the external atmosphere to facilitate the removal and placement of the fluid flow unit 200.

Specifically, the second switching valve 3300 may be a three-way solenoid valve or a valve having more channels. When the second switching valve 3300 is in the first operating state and the first switching valve 3200 communicates with the groove channel 2030, the groove channel 2030 can communicate with the vacuum pump 3100, so as to adsorb the fluid flow unit 200 onto the carrier stage 2100. When the second switching valve 3300 is in the first operating state and the first switching valve 3200 communicates with the output port 260, the output port 260 can communicate with the vacuum pump 3100, so as to suck away the residual liquid adhering to the manifold assembly 100. When the second switching valve 3300 is in the second operating state, the first switching valve 3200 can communicate with the groove channel 2030 or the output port 260, such that the groove channel 2030 or the output port 260 communicates with the external atmosphere, so as to remove the fluid flow unit 200 from the carrier stage 2100.

Referring to FIG. 6, in some embodiments, the second switching valve 3300 includes a third opening 3310, a fourth opening 3320, and a fifth opening 3330. The vacuum apparatus 3000 includes a first conduit 3400, a second conduit 3500, and a third conduit 3600. One end of the first conduit 3400 communicates with the third opening 3310 of the second switching valve 3300, and the other end communicates with the first opening 3210 of the first switching valve 3200. The second conduit 3500 and the third conduit 3600 communicate with the fourth opening 3320 and the fifth opening 3330 of the second switching valve 3300, respectively. The vacuum pump 3100 is arranged on the second conduit 3500.

In this way, by selecting the fourth opening 3320 and the fifth opening 3330, the second switching valve 3300 can switch between the first operating state and the second operating state.

Specifically, the third opening 3310, the fourth opening 3320, and the fifth opening 3330 may be of a regular shape, such as a circle or a polygon, or of an irregular shape. In the embodiments of the present disclosure, to facilitate the formation and manufacturing of the third opening 3310, the fourth opening 3320, and the fifth opening 3330 and/or the connection thereof with a common tube, the third opening 3310, the fourth opening 3320, and the fifth opening 3330 are circular in shape.

The first conduit 3400, the second conduit 3500, and the third conduit 3600 may be a tube for transmitting fluid. The fluid includes but is not limited to a gas, a liquid, or the like. The cross-section of the first conduit 3400, the second conduit 3500, and the third conduit 3600 may be a circular shape, and the length and diameter dimensions of the first conduit 3400, the second conduit 3500, and the third conduit 3600 may be set according to actual requirements.

Referring to FIG. 6, in some embodiments, a gas-water separation assembly 3410 is arranged on the first conduit 3400. The gas-water separation assembly 3410 is configured to separate the gas and liquid entering the first conduit 3400.

In this way, the gas and liquid entering the first conduit 3400 can be separated by the gas-water separation assembly 3410, preventing the liquid from entering the vacuum pump 3100, which could otherwise affect the vacuum adsorption effect and the service life of the vacuum pump 3100.

Specifically, the gas-water separation assembly 3410 may be a vacuum filter with a moisture separation function. The gas-water separation assembly 3410 can separate the gas and liquid in the first conduit 3400 and store the separated liquid.

Referring to FIG. 6, in some embodiments, a pressure detection member 3420 is arranged on the first conduit 3400.

In this way, the pressure detection member 3420 can detect the pressure on the first conduit 3400.

Specifically, the pressure detection member 3420 may be a pressure sensor, and the pressure detection member 3420 can detect the pressure on the first conduit 3400. In some embodiments, a vacuum pressure regulation valve 3430 may be arranged between the pressure detection member 3420 and the second switching valve 3300. The vacuum pressure regulation valve 3430 can adjust the opening degree of the second switching valve 3300 according to the detection result of the pressure detection member 3420, thereby regulating the pressure on the first conduit 3400.

Referring to FIG. 6, in some embodiments, a muffler 3510 is arranged on the second conduit 3500.

In this way, the muffler 3510 can lower the exhaust noise of the vacuum pump 3100, protect the quality of the working environment of the liquid path system 1000, and improve work efficiency.

Specifically, the muffler 3510 may be a device for preventing sound from being transmitted while allowing airflow to pass through. The muffler 3510 may be made of stainless steel and polyester fiber, and the muffler 3510 may be of a cylindrical shape. The air inlet of the muffler 3510 can communicate with the air outlet of the vacuum pump 3100, such that the noise generated by the vacuum pump 3100 can enter the muffler 3510 to be attenuated.

Referring to FIG. 6, in some embodiments, an air filter 3610 is arranged on the third conduit 3600.

**In** this way, the air filter 3610 can filter impurities in the gas entering the third conduit 3600, preventing the impurities from contaminating the liquid path system 1000 through the third conduit 3600, which could otherwise affect the adsorptivity and the sequencing accuracy of the vacuum pump 3100.

Specifically, the air filter 3610 can filter out dust and solid impurities in the air. Different filter elements may be selected according to actual requirements to achieve the corresponding filtration precision. Referring to FIG. 6, in some embodiments, the pump group 300 includes a syringe pump 310. The syringe pump 310 is configured to provide power, allowing liquid to enter the liquid path system 1000 and flow back and forth between the manifold assembly 100 and the fluid channel 210.

**In** this way, the syringe pump 310 can provide power to drive the liquid to flow back and forth between the manifold assembly 100 and the fluid channel 210.

Specifically, there may be a plurality of syringe pumps 310, and the plurality of syringe pumps 310 are arranged in one-to-one correspondence with the plurality of liquid outlets 140. The syringe pump 310 may include a syringe 320 and a single pump. The single pump may include a four-port valve head 330. The single pump communicates with the syringe 320, the second manifold member 130, and a waste liquid reservoir 340 via the four-port valve head 330. The waste liquid reservoir 340 can store waste liquid flowing through the first manifold member 110 and the second manifold member 130.

The syringe pump 310 may operate bi-directionally, that is, it may drive liquid in both forward and backward directions as required. The syringe pump 310 may drive the liquid to sequentially pass through the liquid outlet 140, the second liquid passage hole 450, the fluid channel outlet 230, the fluid channel inlet 220, and the first liquid passage hole 410 to flow into the liquid inlet 120. The syringe pump 310 may also drive the liquid to sequentially pass through the liquid inlet 120, the first liquid passage hole 410, the fluid channel inlet 220, the fluid channel outlet 230, the second liquid passage hole 450, and the liquid outlet 140 to flow into the waste liquid reservoir 340. Since the fluid flow unit 200 can withstand a relatively large positive pressure, the liquid can clean the related conduits while flowing back and forth between the manifold assembly 100 and the fluid channel 210.

**In** one embodiment, the application process of the liquid path system 1000 according to the embodiments of the present disclosure may be as follows: The positioning pin 250 on the fluid flow unit 200 is plug-fitted into the positioning hole 2020 on the carrier stage 2100, allowing the manifold assembly 100 to communicate with the fluid channel 210. The adsorption hole 2060 on the carrier stage 2100 communicates with the first switching valve 3200 via the gas path connector 3010, the first conduit 3400 communicates with the first switching valve 3200 and the second switching valve 3300, and the second switching valve 3300 communicates with the vacuum pump 3100 on the second conduit 3500, such that the vacuum pump 3100 can adsorb and fix the fluid flow unit 200 on the carrier stage 2100. The manifold assembly 100 is communicated with the syringe pump 310, and the syringe pump 310 drives the liquid to flow back and forth between the manifold assembly 100 and the fluid channel 210. The liquid flows into the waste liquid reservoir 340 after sufficiently redissolving the crystal formed by the residue on the manifold assembly 100 and sufficiently mixing and/or replacing the residue on the manifold assembly 100. The first switching valve 3200 is communicated with the output port 260 of the fluid flow unit 200, and the fluid flow unit 200 is moved to cut off the communication between the fluid channel 210 and the manifold assembly 100. The vacuum pump 3100 is used to remove the residual liquid adhering to the manifold assembly 100.

Referring to FIG. 20, the embodiments of the present disclosure provide a method for controlling liquid flow in the liquid path system 1000. The method includes:
a) communicating the manifold assembly 100 with the fluid channel 210;
b) using the pump group 300 to drive liquid to enter the fluid channel 210 through the manifold assembly 100; and
c) using the pump group 300 to drive the liquid to flow from the fluid channel 210 back into the manifold assembly 100, where
   steps b) and c) are repeated.

**In** this way, through the above steps, the back-and-forth flow of the liquid between the manifold assembly 100 and the fluid channel 210 can be achieved, the residue on the manifold assembly 100 can be sufficiently mixed and/or replaced, and the crystal formed by the residue remaining on the manifold assembly 100 can be sufficiently redissolved, thereby facilitating the cleaning of the manifold assembly 100 and improving the sequencing effect.

Specifically, in step a), the fluid flow unit 200 can be adsorbed onto the carrier surface 2010 by the vacuum pump 3100, thereby communicating the manifold assembly 100 with the fluid channel 210.

**In** step b), the pump group 300 may include a syringe pump 310, and the syringe pump 310 can drive liquid to flow into the fluid channel 210 through the manifold assembly 100.

**In** step c), the pump group 300 may include a syringe pump 310, and the syringe pump 310 can drive the liquid to flow from the fluid channel 210 back into the manifold assembly 100.

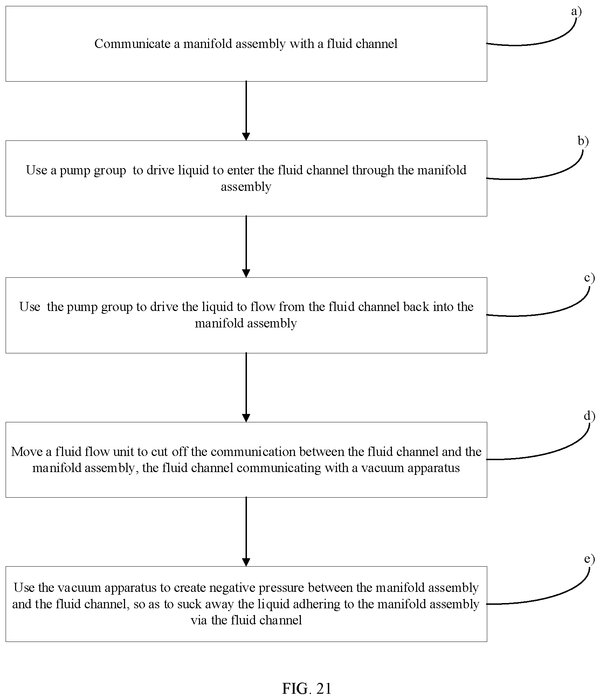

Referring to FIG. 21, in some embodiments, the method includes:
d) moving the fluid flow unit 200 to cut off the communication between the fluid channel 210 and the manifold assembly 100, the fluid channel 210 communicating with the vacuum apparatus 3000; and
e) using the vacuum apparatus 3000 to create negative pressure between the manifold assembly 100 and the fluid channel 210, so as to suck away residual liquid adhering to the manifold assembly 100 via the fluid channel 210, where
d) and e) are performed after a), b), and c) are completed.

**In** this way, through the above steps, the residual liquid adhering to the manifold assembly 100 can be sucked away. Performing d) after a), b), and c) are completed is conducive to preventing the residue and/or the crystal formed by the residue from blocking the conduit, which could otherwise affect the adsorption effect and the service life of the vacuum apparatus 3000.

Specifically, the fluid flow unit 200 can be moved to cut off the communication between the fluid channel 210 and the manifold assembly 100, for example, to drive the fluid flow unit 200 to move away from the carrier stage 2100 in the thickness direction of the fluid flow unit 200. Alternatively, the manifold assembly 100 can be moved to cut off the communication between the fluid channel 210 and the manifold assembly 100, for example, to drive the manifold assembly 100 to move away from the fluid flow unit 200 in the thickness direction of the fluid flow unit 200.

Referring to FIG. 19, in some embodiments, a sealing ring 2070 is arranged in the positioning hole 2020 of the carrier stage 2100. The positioning pin 250 of the fluid flow unit 200 is inserted into the sealing ring 2070. The fluid flow unit 200 can move, relative to the carrier stage 2100, 1 mm to 3 mm to prevent the positioning pin 250 from sliding out from the seal ring 2070.

The embodiments of the present disclosure provide a sequencing system, which includes a liquid path system 100. **In** this way, the liquid path system 100 can select different sample loading modes according to the number of the samples under test, which improves the loading flexibility of the samples under test, avoids cross-contamination among the plurality of samples under test, and improves the sequencing quality and the sequencing efficiency.

The embodiments of the present disclosure provide a sequencing system, which includes a liquid path system 1000.

**In** the sequencing system according to the embodiments of the present disclosure, the liquid path system 1000 drives the liquid to flow back and forth between the manifold assembly 100 and the fluid channel 210 via the pump group 300, such that the residue on the manifold assembly 100 can be sufficiently mixed and/or replaced, and the crystal formed by the residue on the manifold assembly 100 can be sufficiently redissolved, thereby facilitating the cleaning of the manifold assembly 100 and improving the sequencing effect. The sequencing system includes but is not limited to a nucleic acid sequencing system.

The embodiments of the present disclosure provide a computer storage medium, where the computer program, when run by a processor, causes the processor to implement the method for controlling liquid inflow of the liquid path system according to any one of the embodiments described above.

Specifically, in one embodiment, the processor may be a central processing unit (CPU). The processor may also be other general-purpose processors, digital signal processors (DSP), application specific integrated circuits (ASIC), field-programmable gate arrays (FPGA), or other chips such as programmable logic devices, discrete gates, transistor logic devices, discrete hardware components, or a combination thereof. The computer program can be stored in a memory. The memory, as a non-transitory computer-readable storage medium, can be configured to store non-transitory software programs, non-transitory computer-executable programs, and modules, such as program instructions/modules corresponding to the methods in the aforementioned method embodiments. The processor, by executing non-transitory software programs, instructions, and modules stored in the memory, performs various functional applications and data processing of the processor, thereby implementing the control method in the aforementioned method embodiments.

The storage medium may include but is not limited to various media capable of storing computer programs, such as a U disk, a read-only memory (ROM), a random access memory (RAM), a portable hard disk, a magnetic disk, or an optical disk.

**In** the description of this specification, the description of the terms "one embodiment", "some embodiments", "schematic embodiments", "examples", "specific examples", "some examples", or the like, means that the particular features, structures, materials, or characteristics described in the embodiments or examples are included in at least one embodiment or example of the present disclosure. **In** this specification, the schematic description of the aforementioned terms does not necessarily refer to the same embodiment or example. Moreover, the specific feature, structure, material, or characteristic described may be combined in any appropriate manner in any one or more embodiments or examples.

**In** the description of the present disclosure, it should be understood that orientational or positional relationships indicated by terms such as "central", "longitudinal", "transverse", "length", "width", "thickness", "upper", "lower", "front", "rear", "left", "right", "vertical", "horizontal", "top", "bottom", "inner", "outer", "clockwise", or "counterclockwise", are those shown on the basis of the accompanying drawings, and are merely intended to facilitate and simplify the description rather than indicate or imply that the indicated apparatus or element must have a specific orientation and be configured and operated according to the specific orientation. Such relationships should not be construed as limiting the present disclosure. **In** addition, the terms "first" and "second" are used for descriptive purposes only and should not be construed as indicating or implying relative importance or implicitly indicating the number of technical features described. Therefore, features defined with "first" and "second" may explicitly or implicitly include one or more of the features. **In** the description of the present disclosure, unless otherwise specifically defined, the "plurality" means two or more.

**In** the description of the present disclosure, it should be noted that unless otherwise clearly specified and defined, the terms "mount", "link", and "connect" should be interpreted in their broad sense. For example, the connection may be a fixed connection, detachable connection, or integral connection; a mechanic connection, electric connection, or communicative connection; or a direct connection, indirect connection through an intermediate, internal communication of two elements, or interaction between two elements. For those of ordinary skill in the art, the specific meanings of the aforementioned terms in the present disclosure can be interpreted according to specific conditions.

**In** the present disclosure, unless otherwise explicitly specified and limited, a first feature being "above" or "below" a second feature may encompass that the first and second features are in direct contact, and that the first and second features are not in direct contact but are in contact via an additional feature between them. Moreover, a first feature being "on", "over", and "above" a second feature encompasses that the first feature is right above or obliquely above the second feature, or simply means that the first feature is at a vertically higher position than the second feature. A first feature being "under", "beneath", and "below" a second feature encompasses that the first feature is right below or obliquely below the second feature, or simply means that the first feature is at a vertically lower position than the second feature.

Although the embodiments of the present disclosure have been illustrated and described, it can be understood by those of ordinary skill in the art that various changes, modifications, replacements, and variations can be made to these embodiments without departing from the principle and purpose of the present disclosure, and the scope of the present disclosure is defined by the claims and equivalents therefore.

The invention is further characterized by the following items:
1. A method for controlling liquid inflow of a liquid path system, wherein
   the liquid path system comprises a flow cell and a pump valve assembly, the flow cell comprises a plurality of fluid channels, and each fluid channel being provided with an inlet and an outlet; and
   the method comprises:
      using the pump valve assembly to aspirate a plurality of samples under test from a sample cartridge and
      pump each sample under test from the outlet of one corresponding fluid channel into the fluid channel; or
      using the pump valve assembly to aspirate a single sample under test from the sample cartridge and pump the single sample under test from the inlet of each fluid channel into the fluid channel.
2. The method according to item 1, wherein
   the liquid path system comprises a plurality of buffer regions, the plurality of buffer regions being arranged in one-to-one correspondence with the plurality of fluid channels; and
   pumping each sample under test from the outlet of the one corresponding fluid channel into the fluid channel comprises:
      pumping each sample under test into one corresponding buffer region, and pumping the sample under test in each buffer region from the outlet of the corresponding fluid channel into the fluid channel.
3. The method according to item 2, wherein
   the method further comprises:
   using the pump valve assembly to aspirate a reagent from a reagent kit, pump the reagent into each buffer region, and pump the reagent in each buffer region from the outlet of a corresponding fluid channel into the fluid channel.
4. The method according to item 3, wherein
   the pump valve assembly pumps the sample under test and/or the reagent into the buffer region in a negative pressure-driven manner.
5. The method according to item 3 or 4, wherein
   the pump valve assembly pumps the sample under test and/or the reagent in the buffer region from the outlet of the fluid channel into the fluid channel in a positive pressure-driven manner.
6. The method according to item 1 or 2, wherein
   before using the pump valve assembly to aspirate the plurality of samples under test from the sample cartridge, the method comprises:
   using the pump valve assembly to aspirate a reagent from a reagent kit and pump the reagent into the sample cartridge to mix with each sample under test in the sample cartridge.
7. The method according to item 6, wherein
   using the pump valve assembly to aspirate the plurality of samples under test from the sample cartridge comprises:
   using the pump valve assembly to aspirate a mixture of each sample under test and the reagent from the sample cartridge.
8. The method according to item 7, wherein
   pumping each sample under test from the outlet of the one corresponding fluid channel into the fluid channel comprises:
   pumping the mixture of each sample under test and the reagent from the outlet of the one corresponding fluid channel into the fluid channel.
9. The method according to item 8, wherein
   the liquid path system comprises a plurality of buffer regions, the plurality of buffer regions being arranged in one-to-one correspondence with the plurality of fluid channels; and
   using the pump valve assembly to aspirate the reagent from the reagent kit and pump the reagent into the sample cartridge to mix with each sample under test in the sample cartridge comprises:
   using the pump valve assembly to pump the reagent into each buffer region and pump the reagent in each buffer region into the sample cartridge to mix with a corresponding sample under test in the sample cartridge.
10. The method according to item 9, wherein
   pumping the mixture of each sample under test and the reagent from the outlet of the one corresponding fluid channel into the fluid channel comprises:
   pumping the mixture of each sample under test and the reagent back into the corresponding buffer region,
   and pumping the mixture of the sample under test and the reagent in each buffer region from the outlet of the corresponding fluid channel into the fluid channel.
11. The method according to item 10, wherein
   the pump valve assembly pumps the mixture of the sample under test and the reagent into the buffer region in a negative pressure-driven manner.
12. The method according to item 10 or 11, wherein
   the pump valve assembly pumps the mixture of the sample under test and the reagent in the buffer region from the outlet of the fluid channel into the fluid channel in a positive pressure-driven manner.
13. The method according to item 1, wherein
   the method further comprises:
   using the pump valve assembly to aspirate a reagent from a reagent kit and pump the reagent from the inlet of each fluid channel into the fluid channel.
14. The method according to item 13, wherein
   the pump valve assembly pumps the single sample under test and/or the reagent from the inlet of each fluid channel into the fluid channel in a negative pressure-driven manner.
15. The method according to any one of items 1 to 14, wherein
   the pump valve assembly comprises a first flow path selection valve and a pump group, wherein the first flow path selection valve and the pump group are both located downstream of the flow cell;
   the first flow path selection valve is configured to communicate the pump group with the fluid channel, and/or communicate the pump group with the sample cartridge; and
   a plurality of samples under test are aspirated from the sample cartridge via the first flow path selection valve and the pump group, and each sample under test is allowed to enter from the outlet of one corresponding fluid channel into the fluid channel.
16. The method according to item 15, wherein
   a plurality of buffer regions are arranged between the first flow path selection valve and the pump group, the plurality of buffer regions being arranged in one-to-one correspondence with the plurality of fluid channels; and
   aspirating the plurality of samples under test from the sample cartridge via the first flow path selection valve and the pump group and allowing each sample under test to enter from the outlet of the one corresponding fluid channel into the fluid channel comprises:
      pumping, by the pump group, each sample under test from the sample cartridge into one corresponding buffer region through the first flow path selection valve, and pumping the sample under test in each buffer region from the outlet of a corresponding fluid channel into the fluid channel through the first flow path selection valve.
17. The method according to item 16, wherein
   the pump valve assembly further comprises a second flow path selection valve, wherein
   the second flow path selection valve is located upstream of the flow cell, and the second flow path selection valve is configured to communicate the reagent kit with the first flow path selection valve; and
   a reagent is aspirated from the reagent kit via the first flow path selection valve, the second flow path selection valve, and the pump group, and the reagent is allowed to enter from the outlet of the fluid channel into the fluid channel.
18. The method according to item 17, wherein
   aspirating the reagent from the reagent kit via the first flow path selection valve, the second flow path selection valve, and the pump group and allowing the reagent to enter from the outlet of the fluid channel into the fluid channel comprises:
   pumping, by the pump group, the reagent from the reagent kit into each buffer region through the second flow path selection valve and the first flow path selection valve, and pumping the reagent in each buffer region from the outlet of a corresponding fluid channel into the fluid channel through the first flow path selection valve.
19. The method according to item 18, wherein
   the pump group pumps the sample under test and/or the reagent into the buffer region through the first flow path selection valve in a negative pressure-driven manner.
20. The method according to item 18 or 19, wherein
   the pump group pumps the sample under test and/or the reagent in the buffer region from the outlet of the fluid channel into the fluid channel through the first flow path selection valve in a positive pressure-driven manner.
21. The method according to item 15, wherein
   the pump valve assembly further comprises a second flow path selection valve, wherein the second flow path selection valve is located upstream of the flow cell, and the second flow path selection valve is configured to communicate the reagent kit with the first flow path selection valve; and before the plurality of samples under test are aspirated from the sample cartridge via the first flow path selection valve and the pump group, the method further comprises:
   aspirating a reagent from the reagent kit via the first flow path selection valve, the second flow path selection valve, and the pump group, and pumping the reagent into the sample cartridge to mix with the sample under test in the sample cartridge.
22. The method according to item 21, wherein
   a plurality of buffer regions are arranged between the first flow path selection valve and the pump group, the plurality of buffer regions being arranged in one-to-one correspondence with the plurality of fluid channels; and
   aspirating the reagent from the reagent kit via the first flow path selection valve, the second flow path selection valve, and the pump group and pumping the reagent into the sample cartridge to mix with the sample under test in the sample cartridge comprises:
      pumping, by the pump group, the reagent from the reagent kit into each buffer region through the first flow path selection valve and the second flow path selection valve, and pumping the reagent in each buffer region into the sample cartridge through the first flow path selection valve to mix with a corresponding sample under test in the sample cartridge.
23. The method according to item 21 or 22, wherein
   aspirating the plurality of samples under test from the sample cartridge via the first flow path selection valve and the pump group and allowing each sample under test to enter from the outlet of the corresponding fluid channel into the fluid channel comprises:
   pumping, by the pump group, the mixture of each sample under test and the reagent into a corresponding buffer region through the first flow path selection valve, and pumping the mixture of the sample under test and the reagent in each buffer region from the outlet of a corresponding fluid channel into the fluid channel through the first flow path selection valve.
24. The method according to item 23, wherein
   the pump group pumps the mixture of each sample under test and the reagent into one corresponding buffer region through the first flow path selection valve in a negative pressure-driven manner.
25. The method according to item 23 or 24, wherein
   the pump group pumps the mixture of the sample under test and the reagent in each buffer region from the outlet of a corresponding fluid channel into the fluid channel through the first flow path selection valve in a positive pressure-driven manner.
26. The method according to item 15, wherein
   the pump valve assembly further comprises a second flow path selection valve and a manifold assembly, wherein
   the second flow path selection valve and the manifold assembly are located upstream of the flow cell, the second flow path selection valve is configured to communicate the reagent kit with the manifold assembly and/or communicate the reagent kit with the first flow path selection valve, and the manifold assembly communicates with the fluid channel of the flow cell; and
   a single sample under test and/or a reagent are aspirated from the sample cartridge and/or the reagent kit via the second flow path selection valve, the manifold assembly, and the pump group, and the single sample under test and/or the reagent are allowed to enter from the inlet of each fluid channel into the fluid channel.
27. The method according to item 26, wherein
   the pump group pumps the single sample under test and/or the reagent from the inlet of each fluid channel into the fluid channel in a negative pressure-driven manner.
28. The method according to any one of items 15 to 27, wherein
   the first flow path selection valve comprises a plurality of sets of ports, each set of ports being configured to control liquid inflow of one fluid channel, wherein
   each set of ports comprises a first port, a second port, a third port, and a fourth port, wherein the first port is connected to the outlet of the fluid channel, the second port is connected to the buffer region, the third port is connected to the sample cartridge, the fourth port is connected to the reagent kit, and any one of the first port, the third port, and the fourth port selectively communicates with the second port.
29. The method according to any one of items 1 to 28, wherein
   the liquid path system comprises:
   a manifold assembly and a fluid flow unit, the pump valve assembly comprises a pump group, wherein the fluid flow unit comprises at least one fluid channel, and the pump group is connected to the fluid flow unit; and
   the method comprises:
      a) communicating the manifold assembly with the fluid channel;
      b) using the pump group to drive liquid to enter the fluid channel through the manifold assembly; and
      c) using the pump group to drive the liquid to flow from the fluid channel back into the manifold assembly,
   wherein
      steps b) and c) are repeated.
30. The method according to item 29, wherein
   the method comprises:
   d) moving the fluid flow unit to cut off the communication between the fluid channel and the manifold assembly, the fluid channel communicating with a vacuum apparatus; and
   e) using the vacuum apparatus to create negative pressure between the manifold assembly and the fluid channel, so as to suck away residual liquid adhering to the manifold assembly via the fluid channel, wherein d) and e) are performed after a), b), and c) are completed.
31. A liquid path system, comprising:
   a detachable flow cell, wherein the flow cell comprises a plurality of fluid channels, and each fluid channel is provided with an inlet and an outlet; and
   a pump valve assembly, wherein the pump valve assembly is configured to aspirate a plurality of samples under test from a sample cartridge and pump each sample under test from the outlet of one corresponding fluid channel into the fluid channel; or
   the pump valve assembly is configured to aspirate a single sample under test from the sample cartridge and
   pump the single sample under test from the inlet of each fluid channel into the fluid channel.
32. The liquid path system according to item 31, wherein the pump valve assembly comprises a first flow path selection valve and a pump group, wherein the first flow path selection valve and the pump group are both located downstream of the flow cell, the first flow path selection valve communicates the pump group with the fluid channel and/or communicates the pump group with the sample cartridge, and the first flow path selection valve and the pump group are configured to aspirate a plurality of samples under test from the sample cartridge and allow each sample under test to enter from the outlet of one corresponding fluid channel into the fluid channel.
33. The liquid path system according to item 32, wherein
   the liquid path system comprises a plurality of buffer regions, wherein the plurality of buffer regions are arranged in one-to-one correspondence with the plurality of fluid channels, and the plurality of buffer regions communicate with the first flow path selection valve and the pump group; the first flow path selection valve and the pump group pump each sample under test into one corresponding buffer region and pump the sample under test in each buffer region from the outlet of a corresponding fluid channel into the fluid channel.
34. The liquid path system according to item 33, wherein
   the first flow path selection valve is provided with a plurality of first ports and a plurality of second ports, each first port selectively communicating with one of the second ports, and the second ports being connected to the buffer regions; the liquid path system comprises a plurality of first conduits, the plurality of first conduits being arranged in one-to-one correspondence with the plurality of first ports, and both ends of each first conduit communicating with the outlet of one fluid channel and one of the first ports, respectively.
35. The liquid path system according to item 34, wherein
   the first flow path selection valve is provided with a plurality of third ports, each third port selectively communicating with one of the second ports; the liquid path system comprises a plurality of second conduits, wherein the plurality of second conduits are arranged in one-to-one correspondence with the plurality of third ports, and both ends of each second conduit communicate with the sample cartridge and one of the third ports, respectively; each second conduit is configured to allow one sample under test in the sample cartridge to enter a corresponding buffer region through the first flow path selection valve.
36. The liquid path system according to item 35, wherein the first flow path selection valve is provided with a plurality of fourth ports, each fourth port selectively communicating with one of the second ports; the liquid path system comprises a plurality of third conduits, wherein the plurality of third conduits are arranged in one-to-one correspondence with the plurality of fourth ports, and both ends of each third conduit communicate with a reagent kit and one of the fourth ports, respectively; the third conduits are configured to allow a reagent in the reagent kit to enter the buffer region through the first flow path selection valve.
37. The liquid path system according to item 36, wherein the first flow path selection valve comprises a plurality of communication grooves, and the second port communicates with one of the first port, the third port, and the fourth port via the communication grooves.
38. The liquid path system according to item 37, wherein the first flow path selection valve comprises a stator and a rotor rotatably arranged with the stator, wherein the stator is provided with the plurality of first ports, the plurality of second ports, the plurality of third ports, and the plurality of fourth ports, and the rotor is provided with the communication grooves.
39. The liquid path system according to item 38, wherein the first ports, the second ports, the third ports, and the fourth ports are spaced apart from each other in a circumferential direction of the stator.
40. The liquid path system according to item 38 or 39, wherein there are a plurality of the communication grooves, and the plurality of communication grooves are spaced apart from each other in a circumferential direction of the rotor.
41. The liquid path system according to any one of items 36 to 40, wherein the pump valve assembly comprises a second flow path selection valve, wherein the second flow path selection valve is located upstream of the flow cell, and the second flow path selection valve comprises a common port and at least one connection port, the common port communicating with one end of the third conduit, and the connection port communicating with the reagent kit; the second flow path selection valve is configured for the pump valve assembly to aspirate the reagent from the reagent kit, pump the reagent into each buffer region, and pump the reagent in each buffer region from the outlet of a corresponding fluid channel into the fluid channel.
42. The liquid path system according to item 41, wherein the pump valve assembly is configured to pump the sample under test and/or the reagent into the buffer region in a negative pressure-driven manner.
43. The liquid path system according to item 41 or 42, wherein the pump valve assembly is configured to pump the sample under test and/or the reagent in the buffer region from the outlet of the fluid channel into the fluid channel in a positive pressure-driven manner.
44. The liquid path system according to any one of items 36 to 40, wherein the pump valve assembly comprises a second flow path selection valve, wherein the second flow path selection valve is located upstream of the flow cell, and the second flow path selection valve comprises a common port and at least one connection port, the common port communicating with one end of the third conduit, and the connection port communicating with the reagent kit; the second flow path selection valve is configured for the pump valve assembly to aspirate the reagent from the reagent kit and pump the reagent into the sample cartridge to mix with each sample under test in the sample cartridge.
45. The liquid path system according to item 44, wherein the pump valve assembly is configured to pump the reagent into each buffer region and pump the reagent in each buffer region into the sample cartridge to mix with a corresponding sample under test in the sample cartridge.
46. The liquid path system according to item 45, wherein the pump valve assembly is configured to pump a mixture of each sample under test and the reagent back into a corresponding buffer region and pump the mixture of the sample under test and the reagent in each buffer region from the outlet of a corresponding fluid channel into the fluid channel.
47. The liquid path system according to item 46, wherein the pump valve assembly is configured to pump the mixture of the sample under test and the reagent into the buffer region in a negative pressure-driven manner.
48. The liquid path system according to item 46 or 47, wherein the pump valve assembly is configured to pump the mixture of the sample under test and the reagent in the buffer region from the outlet of the fluid channel into the fluid channel in a positive pressure-driven manner.
49. The liquid path system according to any one of items 41 to 48, wherein
   the pump valve assembly comprises a manifold assembly, wherein the manifold assembly is located upstream of the flow cell, and the second flow path selection valve communicates the reagent kit with the manifold assembly and/or communicates the reagent kit with the first flow path selection valve; the manifold assembly communicates with the common port and each fluid channel of the flow cell; the second flow path selection valve, the manifold assembly, and the pump group are configured to aspirate a single sample under test and/or a reagent from the sample cartridge and/or the reagent kit and allow the single sample under test and/or the reagent to enter from the inlet of each fluid channel into the fluid channel.
50. The liquid path system according to any one of items 31 to 49, comprising:
   a manifold assembly and a fluid flow unit, the pump valve assembly comprises a pump group, wherein the fluid flow unit comprises at least one fluid channel, and the fluid flow unit communicates with the manifold assembly via the fluid channel; the pump group is connected to the fluid flow unit, and the pump group is configured to provide power, allowing liquid to flow back and forth between the manifold assembly and the fluid channel.
51. The liquid path system according to item 50, wherein
   the manifold assembly comprises a first manifold member and a second manifold member, wherein the first manifold member is provided with at least one liquid inlet, and the second manifold member is provided with at least one liquid outlet, the liquid inlets being arranged in one-to-one correspondence with the liquid outlets;
   the fluid flow unit is located between the first manifold member and the second manifold member;
   each fluid channel comprises one fluid channel inlet and one fluid channel outlet;
   the first manifold member communicates with the fluid channel via the liquid inlet and the fluid channel inlet; and
   the second manifold member communicates with the fluid channel via the liquid outlet and the fluid channel outlet.
52. The liquid path system according to item 51, wherein
   the fluid channel inlet and the fluid channel outlet are each provided with a first central axis, and the liquid inlet and the liquid outlet are each provided with a second central axis; the first central axis of the fluid channel inlet is arranged offset from the second central axis of the liquid inlet, and the first central axis of the fluid channel outlet is arranged offset from the second central axis of the liquid outlet.
53. The liquid path system according to item 52, wherein
   a first sealing gasket is arranged between the first manifold member and the fluid flow unit, and a second sealing gasket is arranged between the second manifold member and the fluid flow unit; the first sealing gasket is provided with at least one first liquid passage hole, and the second sealing gasket is provided with at least one second liquid passage hole; the first liquid passage hole is arranged in one-to-one correspondence with the liquid inlet, and the second liquid passage hole is arranged in one-to-one correspondence with the liquid outlet; the liquid inlet communicates with the fluid channel inlet via the first liquid passage hole, and the liquid outlet communicates with the fluid channel outlet via the second liquid passage hole.
54. The liquid path system according to item 53, wherein the first liquid passage hole and the second liquid passage hole are each provided with a third central axis, the third central axis being coaxially arranged with the second central axis.
55. The liquid path system according to item 53 or 54, wherein
   the first sealing gasket comprises a first gasket body and a first flange, wherein the first liquid passage hole is formed on the first gasket body, and the first flange is arranged around the first liquid passage hole; and the second sealing gasket comprises a second gasket body and a second flange, wherein the second liquid passage hole is formed on the second gasket body, and the second flange is arranged around the second liquid passage hole.
56. The liquid path system according to any one of items 50 to 55, comprising:
   a carrier apparatus, wherein
   the manifold assembly and the fluid flow unit are arranged on the carrier apparatus, and the fluid flow unit is detachably connected to the carrier apparatus.
57. The liquid path system according to item 56, wherein the carrier apparatus comprises a carrier stage, wherein the carrier stage is provided with a carrier surface, and the fluid flow unit is located on the carrier surface.
58. The liquid path system according to item 57, wherein the carrier surface is provided with a positioning hole, and the fluid flow unit is provided with a positioning pin; the positioning hole is in plug-in fit with the positioning pin, such that the fluid flow unit is detachably mounted on the carrier surface.
59. The liquid path system according to item 57 or 58, wherein the carrier surface is concavely provided with a groove channel.
60. The liquid path system according to item 59, wherein the groove channel comprises at least one first groove channel and at least one second groove channel, the first groove channel and the second groove channel communicating with each other.
61. The liquid path system according to item 60, wherein the first groove channel and the second groove channel are crosswise arranged.
62. The liquid path system according to item 60 or 61, wherein there are a plurality of first groove channels, the plurality of first groove channels being spaced apart from each other and arranged in parallel, and there are a plurality of second groove channels, the plurality of second groove channels being spaced apart from each other and arranged in parallel, wherein the first groove channels and the second groove channels are perpendicular to each other.
63. The liquid path system according to any one of items 50 to 62, comprising:
   a vacuum apparatus, wherein
   the fluid flow unit is provided with an output port communicating with the fluid channel; and
   the vacuum apparatus communicates with the fluid channel via the output port.
64. The liquid path system according to item 63, wherein there are a plurality of fluid channels, and output ports of the plurality of fluid channels communicate with the vacuum apparatus.
65. The liquid path system according to item 63 or 64, wherein
   the vacuum apparatus comprises a vacuum pump and a first switching valve, wherein the first switching valve is provided with a first opening and two second openings;
   the first switching valve communicates with the vacuum pump via the first opening;
   the first switching valve communicates with the groove channel via one of the second openings; and
   the first switching valve communicates with the output port via the other of the second openings.
66. The liquid path system according to item 65, wherein
   the vacuum apparatus further comprises a second switching valve, the second switching valve communicates with the first switching valve, and the second switching valve is configured to switch between a first operating state and a second operating state, wherein
   when the second switching valve is in the first operating state, the second switching valve communicates with the vacuum pump, such that the vacuum pump is capable of communicating with the groove channel or the output port sequentially via the second switching valve and the first switching valve; and
   when the second switching valve is in the second operating state, communication between the second switching valve and the vacuum pump is cut off, and the second switching valve communicates with external atmosphere, such that the groove channel or the output port is capable of communicating with the external atmosphere sequentially via the first switching valve and the second switching valve.
67. The liquid path system according to item 66, wherein
   the second switching valve comprises a third opening, a fourth opening, and a fifth opening;
   the vacuum apparatus comprises a first conduit, a second conduit, and a third conduit;
   one end of the first conduit communicates with the third opening of the second switching valve, and the other end of the first conduit communicates with the first opening of the first switching valve;
   the second conduit and the third conduit communicate with the fourth opening and the fifth opening of the second switching valve, respectively; and
   the vacuum pump is arranged on the second conduit.
68. The liquid path system according to item 67, wherein a gas-water separation assembly is arranged on the first conduit, and the gas-water separation assembly is configured to separate gas and liquid entering the first conduit.
69. The liquid path system according to item 67 or 68, wherein a pressure detection member is arranged on the first conduit.
70. The liquid path system according to any one of items 67 to 69, wherein a muffler is arranged on the second conduit.
71. The liquid path system according to any one of items 67 to 70, wherein an air filter is arranged on the third conduit.
72. The liquid path system according to any one of items 50 to 71, wherein the pump group comprises a syringe pump, and the syringe pump is configured to provide power, allowing liquid to flow back and forth between the manifold assembly and the fluid channel.
73. A sequencing system, comprising the liquid path system according to any one of items 31 to 72.
74. A computer device, comprising a processor and a memory having a computer program stored thereon, wherein the computer program, when run by the processor, causes the processor to implement the method for controlling liquid flow in the liquid path system according to any one of items 1 to 30.
75. A computer storage medium, wherein a computer program, when run by a processor, causes the processor to implement the method for controlling liquid inflow of the liquid path system according to any one of items 1 to 30.

## Claims

1. A liquid path system, comprising:
a detachable flow cell, wherein the flow cell comprises a plurality of fluid channels, and each fluid channel is provided with an inlet and an outlet; and
a pump valve assembly, wherein the pump valve assembly is configured to aspirate a plurality of samples under test from a sample cartridge and pump each sample under test from the outlet of one corresponding fluid channel into the fluid channel; or
the pump valve assembly is configured to aspirate a single sample under test from the sample cartridge and
pump the single sample under test from the inlet of each fluid channel into the fluid channel.

2. The liquid path system according to claim 1, wherein the pump valve assembly comprises a first flow path selection valve and a pump group, wherein the first flow path selection valve and the pump group are both located downstream of the flow cell, the first flow path selection valve communicates the pump group with the fluid channel and/or communicates the pump group with the sample cartridge, and the first flow path selection valve and the pump group are configured to aspirate a plurality of samples under test from the sample cartridge and allow each sample under test to enter from the outlet of one corresponding fluid channel into the fluid channel.

3. The liquid path system according to claim 2, wherein
the liquid path system comprises a plurality of buffer regions, wherein the plurality of buffer regions are arranged in one-to-one correspondence with the plurality of fluid channels, and the plurality of buffer regions communicate with the first flow path selection valve and the pump group; the first flow path selection valve and the pump group pump each sample under test into one corresponding buffer region and pump the sample under test in each buffer region from the outlet of a corresponding fluid channel into the fluid channel.

4. The liquid path system according to claim 3, wherein
the first flow path selection valve is provided with a plurality of first ports and a plurality of second ports, each first port selectively communicating with one of the second ports, and the second ports being connected to the buffer regions; the liquid path system comprises a plurality of first conduits, the plurality of first conduits being arranged in one-to-one correspondence with the plurality of first ports, and both ends of each first conduit communicating with the outlet of one fluid channel and one of the first ports, respectively;
the first flow path selection valve is provided with a plurality of third ports, each third port selectively communicating with one of the second ports; the liquid path system comprises a plurality of second conduits, wherein the plurality of second conduits are arranged in one-to-one correspondence with the plurality of third ports, and both ends of each second conduit communicate with the sample cartridge and one of the third ports, respectively; each second conduit is configured to allow one sample under test in the sample cartridge to enter a corresponding buffer region through the first flow path selection valve; the first flow path selection valve is provided with a plurality of fourth ports, each fourth port selectively communicating with one of the second ports; the liquid path system comprises a plurality of third conduits, wherein the plurality of third conduits are arranged in one-to-one correspondence with the plurality of fourth ports, and both ends of each third conduit communicate with a reagent kit and one of the fourth ports, respectively; the third conduits are configured to allow a reagent in the reagent kit to enter the buffer region through the first flow path selection valve;
the first flow path selection valve comprises a plurality of communication grooves, and the second port communicates with one of the first port, the third port, and the fourth port via the communication grooves;
optionally, the first flow path selection valve comprises a stator and a rotor rotatably arranged with the stator, wherein the stator is provided with the plurality of first ports, the plurality of second ports, the plurality of third ports, and the plurality of fourth ports, and the rotor is provided with the communication grooves;
optionally, the first ports, the second ports, the third ports, and the fourth ports are spaced apart from each other in a circumferential direction of the stator;
optionally, there are a plurality of the communication grooves, and the plurality of communication grooves are spaced apart from each other in a circumferential direction of the rotor.

5. The liquid path system according to claim 4, wherein the pump valve assembly comprises a second flow path selection valve, wherein the second flow path selection valve is located upstream of the flow cell, and the second flow path selection valve comprises a common port and at least one connection port, the common port communicating with one end of the third conduit, and the connection port communicating with the reagent kit; the second flow path selection valve is configured for the pump valve assembly to aspirate the reagent from the reagent kit, pump the reagent into each buffer region, and pump the reagent in each buffer region from the outlet of a corresponding fluid channel into the fluid channel;
optionally, the pump valve assembly is configured to pump the sample under test and/or the reagent into the buffer region in a negative pressure-driven manner;
optionally, the pump valve assembly is configured to pump the sample under test and/or the reagent in the buffer region from the outlet of the fluid channel into the fluid channel in a positive pressure-driven manner.

6. The liquid path system according to claim 4, wherein the pump valve assembly comprises a second flow path selection valve, wherein the second flow path selection valve is located upstream of the flow cell, and the second flow path selection valve comprises a common port and at least one connection port, the common port communicating with one end of the third conduit, and the connection port communicating with the reagent kit; the second flow path selection valve is configured for the pump valve assembly to aspirate the reagent from the reagent kit and pump the reagent into each buffer region, pump the reagent in each buffer region into the sample cartridge to mix with a corresponding sample under test in the sample cartridge, pump a mixture of each sample under test and the reagent back into a corresponding buffer region and pump the mixture of the sample under test and the reagent in each buffer region from the outlet of a corresponding fluid channel into the fluid channel;
optionally, the pump valve assembly is configured to pump the mixture of the sample under test and the reagent into the buffer region in a negative pressure-driven manner;
optionally, the pump valve assembly is configured to pump the mixture of the sample under test and the reagent in the buffer region from the outlet of the fluid channel into the fluid channel in a positive pressure-driven manner;
optionally, the pump valve assembly comprises a manifold assembly, wherein the manifold assembly is located upstream of the flow cell, and the second flow path selection valve communicates the reagent kit with the manifold assembly and/or communicates the reagent kit with the first flow path selection valve; the manifold assembly communicates with the common port and each fluid channel of the flow cell; the second flow path selection valve, the manifold assembly, and the pump group are configured to aspirate a single sample under test and/or a reagent from the sample cartridge and/or the reagent kit and allow the single sample under test and/or the reagent to enter from the inlet of each fluid channel into the fluid channel.

7. The liquid path system according to any one of claims 1 to 6, comprising:
a manifold assemblyand a fluid flow unit;
the pump valve assembly comprises a pump group, wherein the fluid flow unit comprises at least one fluid channel, and the fluid flow unit communicates with the manifold assembly via the fluid channel; the pump group is connected to the fluid flow unit, and the pump group is configured to provide power, allowing liquid to flow back and forth between the manifold assembly and the fluid channel.

8. The liquid path system according to claim 7, wherein
the manifold assembly comprises a first manifold member and a second manifold member, wherein the first manifold member is provided with at least one liquid inlet, and the second manifold member is provided with at least one liquid outlet, the liquid inlets being arranged in one-to-one correspondence with the liquid outlets;
the fluid flow unit is located between the first manifold member and the second manifold member;
each fluid channel comprises one fluid channel inlet and one fluid channel outlet;
the first manifold member communicates with the fluid channel via the liquid inlet and the fluid channel inlet; and
the second manifold member communicates with the fluid channel via the liquid outlet and the fluid channel outlet.

9. The liquid path system according to claim 8, wherein
the fluid channel inlet and the fluid channel outlet are each provided with a first central axis, and the liquid inlet and the liquid outlet are each provided with a second central axis; the first central axis of the fluid channel inlet is arranged offset from the second central axis of the liquid inlet, and the first central axis of the fluid channel outlet is arranged offset from the second central axis of the liquid outlet;
optionally, a first sealing gasket is arranged between the first manifold member and the fluid flow unit, and a second sealing gasket is arranged between the second manifold member and the fluid flow unit; the first sealing gasket is provided with at least one first liquid passage hole, and the second sealing gasket is provided with at least one second liquid passage hole; the first liquid passage hole is arranged in one-to-one correspondence with the liquid inlet, and the second liquid passage hole is arranged in one-to-one correspondence with the liquid outlet; the liquid inlet communicates with the fluid channel inlet via the first liquid passage hole, and the liquid outlet communicates with the fluid channel outlet via the second liquid passage hole;
optionally, the first liquid passage hole and the second liquid passage hole are each provided with a third central axis, the third central axis being coaxially arranged with the second central axis;
optionally, the first sealing gasket comprises a first gasket body and a first flange, wherein the first liquid passage hole is formed on the first gasket body, and the first flange is arranged around the first liquid passage hole; and
the second sealing gasket comprises a second gasket body and a second flange, wherein the second liquid passage hole is formed on the second gasket body, and the second flange is arranged around the second liquid passage hole;
optionally, comprising:
a carrier apparatus, wherein
the manifold assembly and the fluid flow unit are arranged on the carrier apparatus, and the fluid flow unit is detachably connected to the carrier apparatus;
optionally, the carrier apparatus comprises a carrier stage, wherein the carrier stage is provided with a carrier surface, and the fluid flow unit is located on the carrier surface;
optionally, the carrier surface is provided with a positioning hole, and the fluid flow unit is provided with a positioning pin; the positioning hole is in plug-in fit with the positioning pin, such that the fluid flow unit is detachably mounted on the carrier surface;
optionally, the carrier surface is concavely provided with a groove channel;
optionally, the groove channel comprises at least one first groove channel and at least one second groove channel, the first groove channel and the second groove channel communicating with each other;
optionally, the first groove channel and the second groove channel are crosswise arranged;
optionally, there are a plurality of first groove channels, the plurality of first groove channels being spaced apart from each other and arranged in parallel, and there are a plurality of second groove channels, the plurality of second groove channels being spaced apart from each other and arranged in parallel, wherein
the first groove channels and the second groove channels are perpendicular to each other;
optionally, comprising:
a vacuum apparatus, wherein
the fluid flow unit is provided with an output port communicating with the fluid channel; and
the vacuum apparatus communicates with the fluid channel via the output port;
optionally, there are a plurality of fluid channels, and output ports of the plurality of fluid channels communicate with the vacuum apparatus;.
optionally, the vacuum apparatus comprises a vacuum pump and a first switching valve, wherein
the first switching valve is provided with a first opening and two second openings;
the first switching valve communicates with the vacuum pump via the first opening;
the first switching valve communicates with the groove channel via one of the second openings; and
the first switching valve communicates with the output port via the other of the second openings; optionally, the vacuum apparatus further comprises a second switching valve, the second switching valve communicates with the first switching valve, and the second switching valve is configured to switch between a first operating state and a second operating state, wherein
when the second switching valve is in the first operating state, the second switching valve communicates with the vacuum pump, such that the vacuum pump is capable of communicating with the groove channel or the output port sequentially via the second switching valve and the first switching valve; and
when the second switching valve is in the second operating state, communication between the second switching valve and the vacuum pump is cut off, and the second switching valve communicates with external atmosphere, such that the groove channel or the output port is capable of communicating with the external atmosphere sequentially via the first switching valve and the second switching valve;
optionally, the second switching valve comprises a third opening, a fourth opening, and a fifth opening;
the vacuum apparatus comprises a first conduit, a second conduit, and a third conduit;
one end of the first conduit communicates with the third opening of the second switching valve, and the other end of the first conduit communicates with the first opening of the first switching valve;
the second conduit and the third conduit communicate with the fourth opening and the fifth opening of the second switching valve, respectively; and
the vacuum pump is arranged on the second conduit;
optionally, a gas-water separation assembly is arranged on the first conduit, and the gas-water separation assembly is configured to separate gas and liquid entering the first conduit;
optionally, a pressure detection member is arranged on the first conduit;
optionally, a muffler is arranged on the second conduit;
optionally, an air filter is arranged on the third conduit;
optionally, the pump group comprises a syringe pump, and the syringe pump is configured to provide power, allowing liquid to flow back and forth between the manifold assembly and the fluid channel.

10. A method for controlling liquid inflow of a liquid path system, wherein
the liquid path system comprises a flow cell and a pump valve assembly, the flow cell comprising a plurality of fluid channels, and each fluid channel being provided with an inlet and an outlet; and
the method comprises:
using the pump valve assembly to aspirate a plurality of samples under test from a sample cartridge and
pump each sample under test from the outlet of one corresponding fluid channel into the fluid channel; or
using the pump valve assembly to aspirate a single sample under test from the sample cartridge and pump the single sample under test from the inlet of each fluid channel into the fluid channel.

11. The method according to claim 10, wherein
the liquid path system comprises a plurality of buffer regions, the plurality of buffer regions being arranged in one-to-one correspondence with the plurality of fluid channels; and
pumping each sample under test from the outlet of the one corresponding fluid channel into the fluid channel comprises:
pumping each sample under test into one corresponding buffer region, and pumping the sample under test in each buffer region from the outlet of the corresponding fluid channel into the fluid channel.

12. The method according to claim 11, wherein
the method further comprises:
using the pump valve assembly to aspirate a reagent from a reagent kit, pump the reagent into each buffer region, and pump the reagent in each buffer region from the outlet of a corresponding fluid channel into the fluid channel;
optionally, the pump valve assembly pumps the sample under test and/or the reagent into the buffer region in a negative pressure-driven manner;
optionally, the pump valve assembly pumps the sample under test and/or the reagent in the buffer region from the outlet of the fluid channel into the fluid channel in a positive pressure-driven manner.

13. The method according to claim 10 or **11,** wherein
before using the pump valve assembly to aspirate the plurality of samples under test from the sample cartridge, the method comprises:
using the pump valve assembly to aspirate a reagent from a reagent kit and pump the reagent into the sample cartridge to mix with each sample under test in the sample cartridge;
using the pump valve assembly to aspirate the plurality of samples under test from the sample cartridge comprises:
using the pump valve assembly to aspirate a mixture of each sample under test and the reagent from the sample cartridge;
pumping each sample under test from the outlet of the one corresponding fluid channel into the fluid channel comprises:
pumping the mixture of each sample under test and the reagent from the outlet of the one corresponding fluid channel into the fluid channel.

14. The method according to claim 13, wherein
the liquid path system comprises a plurality of buffer regions, the plurality of buffer regions being arranged in one-to-one correspondence with the plurality of fluid channels; and
using the pump valve assembly to aspirate the reagent from the reagent kit and pump the reagent into the sample cartridge to mix with each sample under test in the sample cartridge comprises:
using the pump valve assembly to pump the reagent into each buffer region and pump the reagent in each buffer region into the sample cartridge to mix with a corresponding sample under test in the sample cartridge;
pumping the mixture of each sample under test and the reagent from the outlet of the one corresponding fluid channel into the fluid channel comprises:
pumping the mixture of each sample under test and the reagent back into the corresponding buffer region, and pumping the mixture of the sample under test and the reagent in each buffer region from the outlet of the corresponding fluid channel into the fluid channel;
optionally, the pump valve assembly pumps the mixture of the sample under test and the reagent into the buffer region in a negative pressure-driven manner;
optionally, the pump valve assembly pumps the mixture of the sample under test and the reagent in the buffer region from the outlet of the fluid channel into the fluid channel in a positive pressure-driven manner;
optionally, the method further comprises:
using the pump valve assembly to aspirate a reagent from a reagent kit and pump the reagent from the inlet of each fluid channel into the fluid channel;
optionally, the pump valve assembly pumps the single sample under test and/or the reagent from the inlet of each fluid channel into the fluid channel in a negative pressure-driven manner;
optionally, the pump valve assembly comprises a first flow path selection valve and a pump group, wherein
the first flow path selection valve and the pump group are both located downstream of the flow cell;
the first flow path selection valve is configured to communicate the pump group with the fluid channel,
and/or communicate the pump group with the sample cartridge; and
a plurality of samples under test are aspirated from the sample cartridge via the first flow path selection valve and the pump group, and each sample under test is allowed to enter from the outlet of one corresponding fluid channel into the fluid channel;
optionally, a plurality of buffer regions are arranged between the first flow path selection valve and the pump group, the plurality of buffer regions being arranged in one-to-one correspondence with the plurality of fluid channels; and
aspirating the plurality of samples under test from the sample cartridge via the first flow path selection valve and the pump group and allowing each sample under test to enter from the outlet of the one corresponding fluid channel into the fluid channel comprises:
pumping, by the pump group, each sample under test from the sample cartridge into one corresponding buffer region through the first flow path selection valve, and pumping the sample under test in each buffer region from the outlet of a corresponding fluid channel into the fluid channel through the first flow path selection valve;
optionally, the pump valve assembly further comprises a second flow path selection valve, wherein
the second flow path selection valve is located upstream of the flow cell, and the second flow path selection valve is configured to communicate the reagent kit with the first flow path selection valve; and
a reagent is aspirated from the reagent kit via the first flow path selection valve, the second flow path selection valve, and the pump group, and the reagent is allowed to enter from the outlet of the fluid channel into the fluid channel;
optionally, aspirating the reagent from the reagent kit via the first flow path selection valve, the second flow path selection valve, and the pump group and allowing the reagent to enter from the outlet of the fluid channel into the fluid channel comprises:
pumping, by the pump group, the reagent from the reagent kit into each buffer region through the second flow path selection valve and the first flow path selection valve, and pumping the reagent in each buffer region from the outlet of a corresponding fluid channel into the fluid channel through the first flow path selection valve;
optionally, the pump group pumps the sample under test and/or the reagent into the buffer region through the first flow path selection valve in a negative pressure-driven manner;
optionally, the pump group pumps the sample under test and/or the reagent in the buffer region from the outlet of the fluid channel into the fluid channel through the first flow path selection valve in a positive pressure-driven manner;
optionally, the pump valve assembly further comprises a second flow path selection valve, wherein
the second flow path selection valve is located upstream of the flow cell, and the second flow path selection valve is configured to communicate the reagent kit with the first flow path selection valve; and
before the plurality of samples under test are aspirated from the sample cartridge via the first flow path selection valve and the pump group, the method further comprises:
aspirating a reagent from the reagent kit via the first flow path selection valve, the second flow path selection valve, and the pump group, and pumping the reagent into the sample cartridge to mix with the sample under test in the sample cartridge;
optionally, a plurality of buffer regions are arranged between the first flow path selection valve and the pump group, the plurality of buffer regions being arranged in one-to-one correspondence with the plurality of fluid channels; and
aspirating the reagent from the reagent kit via the first flow path selection valve, the second flow path selection valve, and the pump group and pumping the reagent into the sample cartridge to mix with the sample under test in the sample cartridge comprises:
pumping, by the pump group, the reagent from the reagent kit into each buffer region through the first flow path selection valve and the second flow path selection valve, and pumping the reagent in each buffer region into the sample cartridge through the first flow path selection valve to mix with a corresponding sample under test in the sample cartridge;
optionally, aspirating the plurality of samples under test from the sample cartridge via the first flow path selection valve and the pump group and allowing each sample under test to enter from the outlet of the corresponding fluid channel into the fluid channel comprises:
pumping, by the pump group, the mixture of each sample under test and the reagent into a corresponding buffer region through the first flow path selection valve, and pumping the mixture of the sample under test and the reagent in each buffer region from the outlet of a corresponding fluid channel into the fluid channel through the first flow path selection valve;
optionally, the pump group pumps the mixture of each sample under test and the reagent into one corresponding buffer region through the first flow path selection valve in a negative pressure-driven manner;
optionally, the pump group pumps the mixture of the sample under test and the reagent in each buffer region from the outlet of a corresponding fluid channel into the fluid channel through the first flow path selection valve in a positive pressure-driven manner;
optionally, the pump valve assembly further comprises a second flow path selection valve and a manifold assembly, wherein
the second flow path selection valve and the manifold assembly are located upstream of the flow cell, the second flow path selection valve is configured to communicate the reagent kit with the manifold assembly and/or communicate the reagent kit with the first flow path selection valve, and the manifold assembly communicates with the fluid channel of the flow cell; and
a single sample under test and/or a reagent are aspirated from the sample cartridge and/or the reagent kit via the second flow path selection valve, the manifold assembly, and the pump group, and the single sample under test and/or the reagent are allowed to enter from the inlet of each fluid channel into the fluid channel; optionally, the pump group pumps the single sample under test and/or the reagent from the inlet of each fluid channel into the fluid channel in a negative pressure-driven manner;
optionally, the first flow path selection valve comprises a plurality of sets of ports, each set of ports being configured to control liquid inflow of one fluid channel, wherein
each set of ports comprises a first port, a second port, a third port, and a fourth port, wherein the first port is connected to the outlet of the fluid channel, the second port is connected to the buffer region, the third port is connected to the sample cartridge, the fourth port is connected to the reagent kit, and any one of the first port, the third port, and the fourth port selectively communicates with the second port.

15. The method according to any one of claims 10 to 14, wherein
the liquid path system comprises:
a manifold assembly and a fluid flow unit, the pump valve assembly comprises a pump group, wherein the fluid flow unit comprises at least one fluid channel, and the pump group is connected to the fluid flow unit; and
the method comprises:
a) communicating the manifold assembly with the fluid channel;
b) using the pump group to drive liquid to enter the fluid channel through the manifold assembly; and
c) using the pump group to drive the liquid to flow from the fluid channel back into the manifold assembly,
wherein
steps b) and c) are repeated;
optionally, the method comprises:
d) moving the fluid flow unit to cut off the communication between the fluid channel and the manifold assembly, the fluid channel communicating with a vacuum apparatus; and
e) using the vacuum apparatus to create negative pressure between the manifold assembly and the fluid channel, so as to suck away residual liquid adhering to the manifold assembly via the fluid channel, wherein d) and e) are performed after a), b), and c) are completed.
